# EUROPEAN PATENT SPECIFICATION

(11) **EP 3 324 637 B1**
(45) Date of publication and mention of the grant of the patent: **22.12.2021**
(21) Application number: 16824339.2
(22) Date of filing: 05.07.2016
(51) Int. Cl.: H04N 21/235, H04N 21/435, H04N 5/278, H04N 21/488, H04N 7/088, H04N 21/43, H04N 21/8547, H04N 21/426, H04N 21/431

(54) **TRANSMISSION DEVICE, TRANSMISSION METHOD, RECEIVING DEVICE AND RECEIVING METHOD**
SENDEVORRICHTUNG, SENDEVERFAHREN, EMPFANGSVORRICHTUNG UND EMPFANGSVERFAHREN
DISPOSITIF D'ÉMISSION, PROCÉDÉ D'ÉMISSION, DISPOSITIF DE RÉCEPTION ET PROCÉDÉ DE RÉCEPTION

(30) Priority: 16.07.2015 JP 2015142497
(43) Date of publication of application: 23.05.2018
(73) Proprietor: Sony Group Corporation, Tokyo 108-0075 (JP)
(72) Inventor: TSUKAGOSHI, Ikuo, Tokyo 108-0075 (JP)
(74) Representative: 2SPL Patentanwälte PartG mbB
(86) International application number: PCT/JP2016/069955
(87) International publication number: WO 2017/010359

(56) References cited:
- EP-A1- 3 236 659
- WO-A2-2012/177874
- US-A1- 2013 185 760
- DATA CODING AND TRANSMISSION SPECIFICATION FOR DIGITAL BROADCASTING ARIB STD-B24, VER.6.1 vol. 3, 16 December 2014, pages 56 - 61, XP009508389

## Description

### TECHNICAL FIELD

The present technology relates to a transmission device, a transmission method, a reception device, and a reception method, more specifically, relates to a transmission device and the like that transmits text information together with video information.

### BACKGROUND ART

In the related art, for example, subtitle (caption) information is transmitted as bitmap data in broadcasting such as digital video broadcasting (DVB). Recently, proposed is a technology in which subtitle information is transmitted as character codes of text, that is, transmitted in a text base. In this case, in a reception side, a font is developed according to resolution.

Further, regarding a case where the text-based transmission of subtitle information is performed, it is proposed to include timing information in the text information. As the text information, for example, WorldWide Web Consortium ((W3C) has proposed Timed Text Markup Language (TTML) (see Patent Document 1) . TTML for subtitle information is also described in Patent Documents 2 and 3.

### CITATION LIST

### PATENT DOCUMENT

Patent Document 1: Japanese Patent Application Laid-Open No. 2012-169885
Patent Document 2: EP 3 236 659 A1
Patent Document 3: US 2013/185760 A1

### SUMMARY OF THE INVENTION

### PROBLEMS TO BE SOLVED BY THE INVENTION

The subtitle text information described in TTML is handled as a file in a format of a markup language. In this case, since the transmission order of respective parameters is not restricted, the reception side needs to scan the entire file to obtain an important parameter.

An object of the present technology is to reduce a process load in a reception side for displaying a subtitle.

### SOLUTIONS TO PROBLEMS

Aspects of the present invention are defined in the appended claims.

### EFFECTS OF THE INVENTION

According to the present technology, a process load in the reception side for displaying a subtitle can be reduced. Here, the effects described in this specification are simply examples and do not set any limitation, and there may be additional effects.

### BRIEF DESCRIPTION OF DRAWINGS

Fig. 1 is a block diagram illustrating an exemplary configuration of a transmitting/receiving system as an embodiment.
Fig. 2 is a block diagram illustrating an exemplary configuration of a transmission device.
Fig. 3 is a diagram illustrating an example of a photoelectric conversion characteristic.
Fig. 4 is a diagram illustrating an exemplary structure of a dynamic range/SEI message and content of major information in the exemplary structure.
Fig. 5 is a diagram illustrating a TTML structure.
Fig. 6 is a diagram illustrating a TTML structure.
Fig. 7 illustrates an exemplary structure of metadata (TTM: TTML Metadata) provided in a header (head) of the TTML structure.
Fig. 8 is a diagram illustrating an exemplary structure of styling (TTS: TTML Styling) provided in a header (head) of the TTML structure.
Fig. 9 is a diagram illustrating an exemplary structure of a styling extension (TTSE: TTML Styling Extension) provided in a header (head) of the TTML structure.
Fig. 10 is a diagram illustrating an exemplary structure of a layout (TTL: TTML layout) provided in a header (head) of the TTML structure.
Fig. 11 is a diagram illustrating an exemplary structure of a body (body) of the TTML structure.
Fig. 12 is a diagram illustrating an exemplary configuration of a PES packet.
Fig. 13 is a diagram illustrating a segment interface in PES.
Fig. 14 is a diagram illustrating an exemplary structure of "TimedTextSubtitling_segments()" provided in a PES data payload.
Fig. 15 is a diagram illustrating other exemplary structures of "TimedTextSubtitling_segments()" provided in the PES data payload.
Fig. 16 is a diagram illustrating an exemplary structure of THMS (text_header_metadata_segment) in which metadata (TTM) is provided.
Fig. 17 is a diagram illustrating an exemplary structure of THSS (text_header_styling_segment) in which a styling (TTS) is provided.
Fig. 18 is a diagram illustrating an exemplary structure of THSES (text_header_styling_extension_segment) in which styling extension (TTML) is provided.
Fig. 19 is a diagram illustrating an exemplary structure of THLS (text_header_layout_segment) in which a layout (TTL) is provided.
Fig. 20 is a diagram illustrating an exemplary structure of TBS (text_body_segment) in which a body (body) of the TTML structure is provided.
Fig. 21 is a diagram illustrating an exemplary structure of THAS (text_header_all_segment) in which a header (head) of the TTML structure is provided.
Fig. 22 is a diagram illustrating an exemplary structure of TWS (text whole segment) in which the entire TTML structure is provided.
Fig. 23 is a diagram illustrating another exemplary structure of TWS (text whole segment) in which the entire TTML structure is provided.
Fig. 24 is a diagram (1/2) illustrating an exemplary structure of APTS (abstract_parameter_TimedText_segment) in which abstract information is provided.
Fig. 25 is a diagram (2/2) illustrating the exemplary structure of APTS (abstract_parameter_TimedText_segment) in which the abstract information is provided.
Fig. 26 is a diagram (1/2) illustrating contents of main information in the APTS exemplary structure.
Fig. 27 is a diagram (2/2) illustrating the contents of the main information in the APTS exemplary structure.
Fig. 28 is a diagram for explaining how to set "PTS", "start _time _offset", and "end _time _offset" in a case of converting TTML to a segment (Segment).
Fig. 29 is a block diagram illustrating an exemplary configuration of a reception device.
Fig. 30 is a block diagram illustrating an exemplary configuration of a subtitle decoder.
Fig. 31 is a diagram illustrating an exemplary configuration of a color gamut/luminance level conversion unit.
Fig. 32 is a diagram illustrating an exemplary configuration of a component part related to a luminance level signal Y included in a luminance level conversion unit.
Fig. 33 is a diagram schematically illustrating operation of the luminance level conversion unit.
Fig. 34 is a diagram for explaining a position conversion in the position/size conversion unit.
Fig. 35 is a diagram for explaining a size conversion in the position/size conversion unit.
Fig. 36 is a diagram for explaining an example of a time series subtitle display control.
Fig. 37 is a diagram for explaining an example of the time series subtitle display control.

### MODE FOR CARRYING OUT THE INVENTION

In the following, a mode for carrying out the present invention (hereinafter, referred to as an embodiment") will be described. Note that description will be provided in the following order.
1. Embodiment
2. Modification

### <1. Embodiment>

### (Exemplary configuration of transmitting/receiving system)

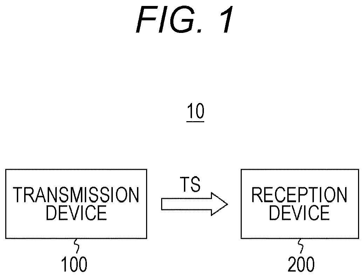

Fig. 1 illustrates an exemplary configuration of a transmitting/receiving system 10, as an embodiment. The transmitting/receiving system 10 includes a transmission device 100 and a reception device 200.

The transmission device 100 generates anMPEG2 transport stream TS as a container and transmits the transport stream TS over airwave or a packet on a network. The transport stream TS includes a video stream containing encoded video data.

Further, the transport stream TS includes a subtitle stream. The subtitle stream includes text information of subtitles (caption) including display timing information and abstract information including information corresponding to a part of pieces of information indicated by the text information. According to the present embodiment, the text information is, for example, in Timed Text Markup Language (TTML) proposed by the World Wide Web Consortium ((W3C).

According to the present embodiment, the abstract information includes display timing information of the subtitles. The display timing information includes information of a display start timing and a display period. Here, the subtitle stream is composed of a PES packet including a PES header and a PES payload, the text information and display timing information of the subtitles are provided in the PES payload, and, for example, the display start timing is expressed by a display offset from a PTS, which is inserted in the PES header.

Further, according to the present embodiment, the abstract information includes display control information used to control a display condition of the subtitles. According to the present embodiment, the display control information includes information related to a displayposition, a color gamut, and a dynamic range of the subtitles . Further, according to the present embodiment, the abstract information includes information of the subject video.

The reception device 200 receives a transport stream TS transmitted from the transmission device 100 over airwave. As described above, the transport stream TS includes a video stream including encoded video data and a subtitle stream including subtitle text information and abstract information .

The reception device 200 obtains video data from the video stream, and obtains subtitle bitmap data and extracts abstract information from the subtitle stream. The reception device 200 superimposes the subtitle bitmap data on the video data and obtains video data for displaying. The television receiver 200 processes the subtitle bitmap data to be superimposed on the video data, on the basis of the abstract information.

According to the present embodiment, the abstract information includes the display timing information of the subtitles and the reception device 200 controls the timing to superimpose the subtitle bitmap data on the video data on the basis of the display timing information. Further, according to the present embodiment, the abstract information includes the display control information used to control the display condition of the subtitles (the display position, color gamut, dynamic range, and the like) and the reception device 200 controls the bitmap condition of the subtitles on the basis of the display control information.

### (Exemplary configuration of transmission device)

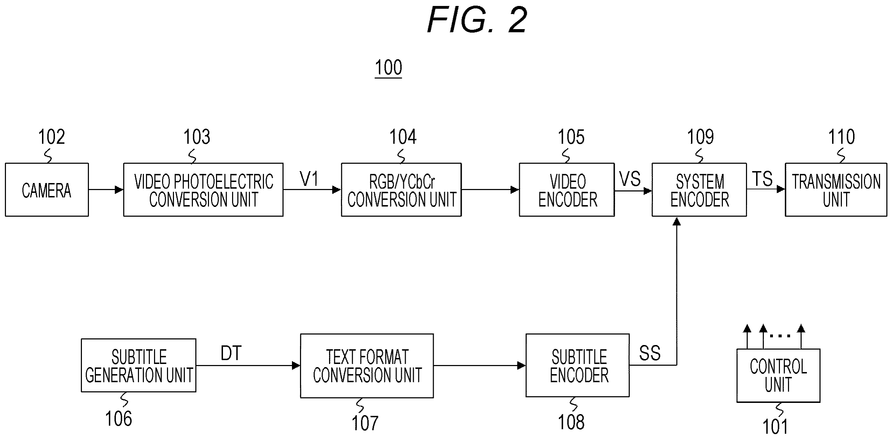

Fig. 2 illustrates an exemplary configuration of the transmission device 100. The transmission device 100 includes a control unit 101, acamera102, a video photoelectric conversion unit 103, an RGB/YCbCr conversion unit 104, a video encoder 105, a subtitle generation unit 106, a text format conversion unit 107, a subtitle encoder 108, a system encoder 109, and a transmission unit 110.

The control unit 101 includes a central processing unit (CPU) and controls operation of each unit in the transmission device 100 on the basis of a control program. The camera 102 captures an image of a subject and outputs video data (image data) in a high dynamic range (HDR) or a standard dynamic range (SDR). An HDR image has a contrast ratio of 0 to 100%*N (N is greater than 1) such as 0 to 1000% exceeding luminance at a white peak of an SDR image. Here, 100% level corresponds to, for example, a white luminance value 100 cd/m².

The video photoelectric conversion unit 103 performs a photoelectric conversion on the video data obtained in the camera 102 and obtains transmission video data V1. In this case, in a case where the video data is SDR video data, a photoelectric conversion is performed as applying an SDR photoelectric conversion characteristic and obtains SDR transmission video data (transmission video data having the SDR photoelectric conversion characteristic). On the other hand, in a case where the video data is HDR video data, the photoelectric conversion is performed as applying an HDR photoelectric conversion characteristic and obtains HDR transmission video data (transmission video data having the HDR photoelectric conversion characteristic).

The RGB/YCbCr conversion unit 104 converts the transmission video data in an RGB domain into a YCbCr (luminance/chrominance) domain. The video encoder 105 performs encoding with MPEG4-AVC, HEVC, or the like for example on transmission video data V1 converted in a YCbCr domain, and generates a video stream (PES stream) VS including encoded video data.

In this case, the video encoder 105 inserts meta-information, such as information indicating an electric-photo conversion characteristic corresponding to the photoelectric conversion characteristic of the transmission video data V1 (transfer function), information indicating a color gamut of the transmission video data V1, and information indicating a reference level, into a video usability information (VUI) region in an SPS NAL unit of an access unit (AU).

Further, the video encoder 105 inserts a newly defined dynamic range/SEI message (Dynamic_range SEI message) which has meta-information, such as information indicating an electric-photo conversion characteristic corresponding to the photoelectric conversion characteristic of the transmission video data V1 (transfer function) and information of a reference level, into a portion of "SEIs" of the access unit (AU).

Here, the reason why information indicating the electric-photo conversion characteristic is provided in the dynamic range/SEI message is because information indicating the electric-photo conversion characteristic corresponding to the HDR photoelectric conversion characteristic is needed in a place other than the VUI since information indicating an electric-photo conversion characteristic (gamma characteristic) corresponding to the SDR photoelectric conversion characteristic is inserted to the VUI of the SPS NAL unit in a case where the HDR photoelectric conversion characteristic is compatible with the SDR photoelectric conversion characteristic, even in a case that the transmission video data V1 is HDR transmission video data.

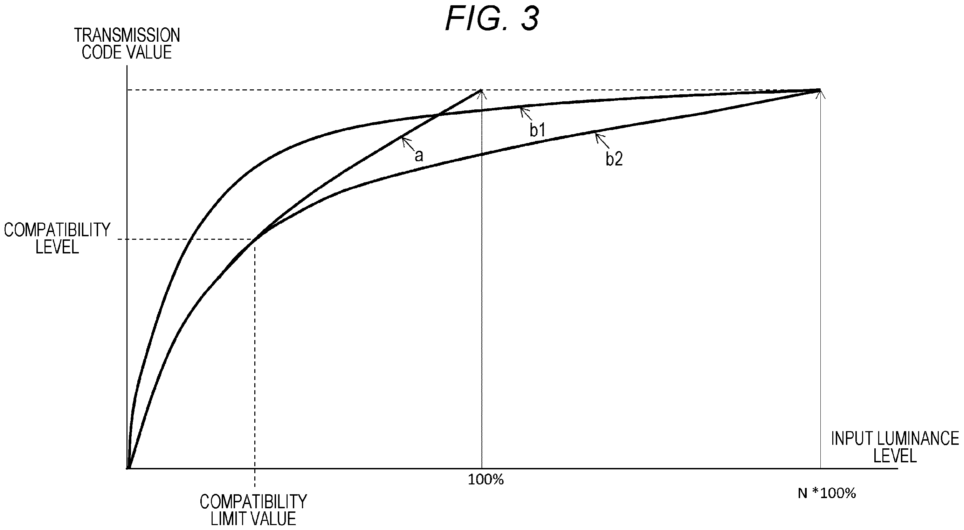

Fig. 3 illustrates an example of a photoelectric conversion characteristic. In this diagram, the horizontal axis indicates an input luminance level and the vertical axis indicates a transmission code value. The curved line a indicates an example of the SDR photoelectric conversion characteristic. Further, the curved line b1 indicates an example of the HDR photoelectric conversion characteristic (which is not compatible with the SDR photoelectric conversion characteristic). Further, the curved line b2 indicates an example of the HDR photoelectric conversion characteristic (which is compatible with the SDR photoelectric conversion characteristic). In the case of this example, the HDR photoelectric conversion characteristic corresponds to the SDR photoelectric conversion characteristic until the input luminance level becomes a compatibility limit value. In a case where the input luminance level is a compatibility limit value, the transmission code value is in a compatibility level.

Further, the reason why information of a reference level is provided to the dynamic range/SEI message is because an insertion of the reference level is not clearly defined, although information indicating an electric-photo conversion characteristic (gamma characteristic) corresponding to the SDR photoelectric conversion characteristic is inserted to the VUI of the SPS NAL unit in a case where the transmission video data V1 is SDR transmission video data.

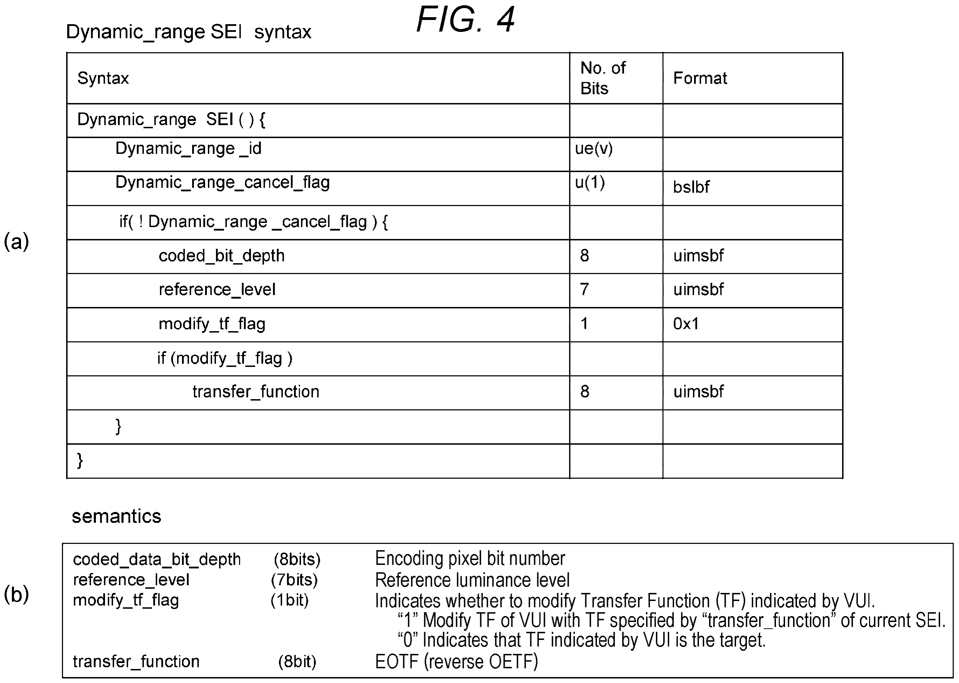

Fig. 4(a) illustrates an exemplary structure (Syntax) of a dynamic range/SEI message. Fig. 4(b) illustrates contents (Semantics) of main information in the exemplary structure. The one-bit flag information of "Dynamic_range_cancel_flag" indicates whether or not to refresh a "Dynamic_range" message. "0" indicates that the message is refreshed and "1" indicates that the message is not refreshed, which means that a previous message is maintained as it is.

In a case where "Dynamic_range_cancel_flag" is "0," there is a following field. An 8-bit field in "coded_data_bit_depth" indicates an encoding pixel bit depth. An 8-bit field in "reference_level" indicates a reference luminance level value as a reference level. A one-bit field in "modify_tf_flag" illustrates whether or not to correct a transfer function (TF) indicated by video usability information (VUI). "0" indicates that the TF indicated by the VUI is a target and "1" indicates that the TF of the VUI is corrected by using a TF specified by "transfer_function" of the SEI. An 8-bit field in "transfer_function" indicates an electric-photo conversion characteristic corresponding to the photoelectric conversion characteristic of the transmission video data V1.

Referring back to Fig. 2, the subtitle generation unit 106 generates text data (character code) DT as the subtitle information. The text format conversion unit 107 inputs the text data DT and obtains subtitle text information in a predetermined format, which is Timed Text Markup Language (TTML) according to the present embodiment.

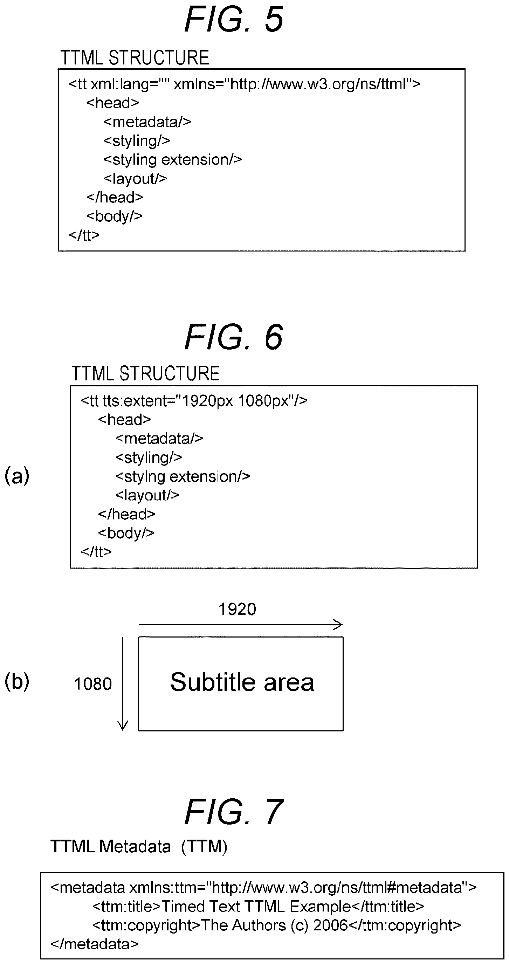

Fig. 5 illustrates an example of a Timed Text Markup Language (TTML) structure. TTML is written on the basis of XML. Here, Fig. 6(a) also illustrates an example of a TTML structure. As illustrated in this example, a subtitle area may be specified in a location of the root container by "tts:extent". Fig. 6(b) illustrates a subtitle area having 1920 pixels in the horizontal and 1080 pixels in the vertical, which are specified by "tts:extent="1920px 1080px"".

The TTML is composed of a header (head) and a body (body). In the header (head), there are elements of metadata (metadata), styling (styling), styling extension (styling extension), layout (layout), and the like. Fig. 7 illustrates an exemplary structure of metadata (TTM: TTML Metadata). The metadata includes metadata title information and copyright information.

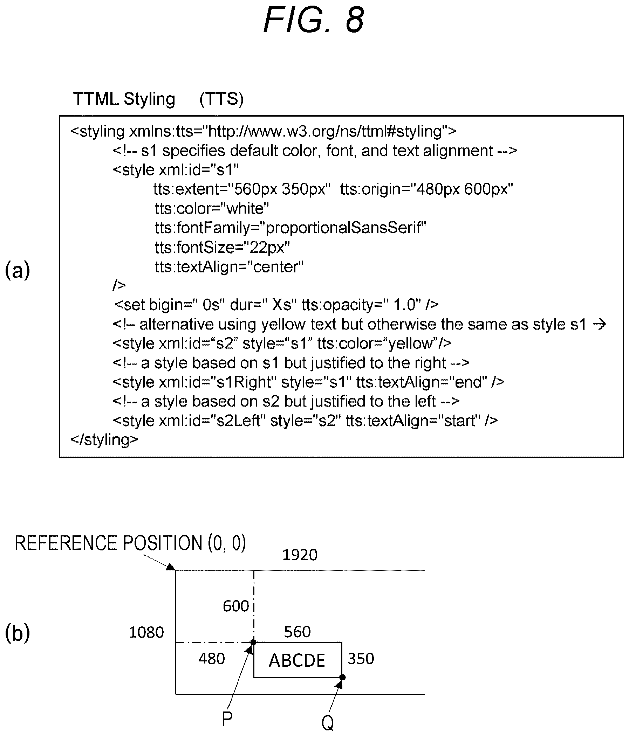

Fig. 8 (a) illustrates an exemplary structure of styling (TTS: TTML Styling). The styling includes information such as a location, a size, a color (color), a font (fontFamily), a font size (fontSize), a text alignment (textAlign), and the like of a region (Region), in addition to an identifier (id) .

"tts:origin" specifies a start position of the region (Region), which is a subtitle display region expressed with the number of pixels. In this example, "tts:origin"480px 600px"" indicates that the start position is (480, 600) (see the arrow P) as illustrated in Fig. 8(b). Further, "tts:extent" specifies an end position of the region with horizontal and vertical offset pixel numbers from the start position. In this example, "tts:extent"560px 350px"" indicates that the end position is (480+560, 600+350) (see the arrow Q) as illustrated in Fig. 8(b). Here, the offset pixel numbers correspond to the horizontal and vertical sizes of the region.

"tts:opacity="1.0"" indicates a mix ratio of the subtitles (caption) and background video. For example, "1.0" indicates that the subtitle is 100% and the background video is 0%, and "0.1" indicates the subtitle (caption) is 0% and the background video is 100%. In the illustrated example, "1.0" is set.

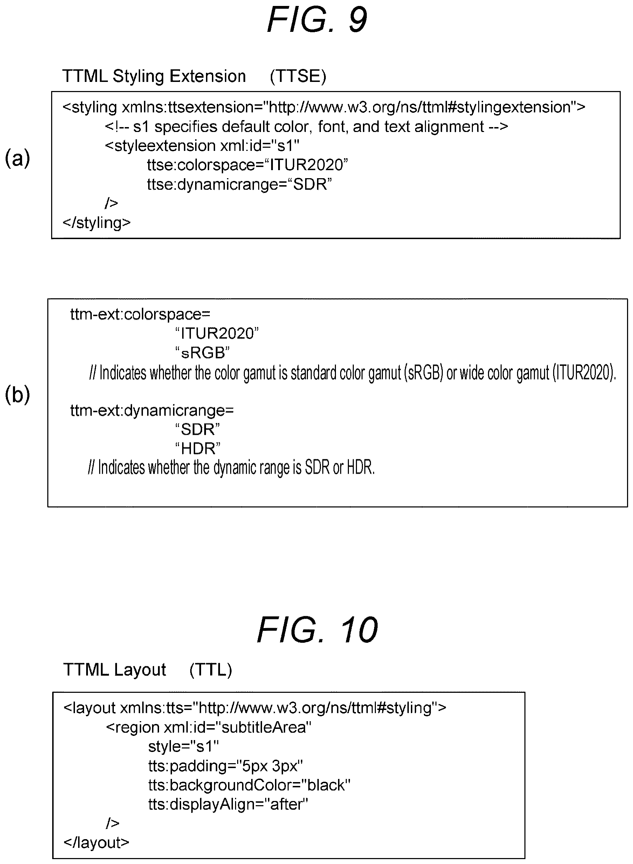

Fig. 9 illustrates an exemplary structure of a styling extension (TTML Styling Extension). The styling extension includes information of a color gamut (colorspace), a dynamic range (dynamicrange) in addition to an identifier (id). The color gamut information specifies a color gamut to be used for the subtitles. The illustrated example indicates that "ITUR2020" is set. The dynamic range information specifies whether the dynamic range to be used for the subtitle is SDR or HDR. The illustrated example indicates that SDR is set.

Fig. 10 illustrates an exemplary structure of a layout (region: TTML layout). The layout includes information such as an offset (padding), a background color (backgroundColor), an alignment (displayAlign), and the like in addition to an identifier (id) of the region where the subtitle is to be placed.

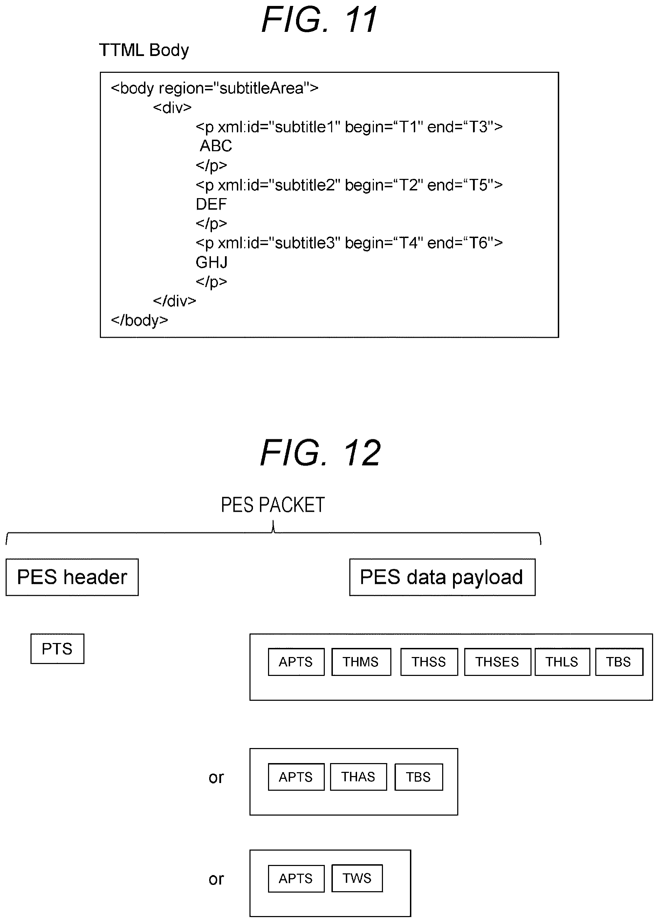

Fig. 11 illustrates an exemplary structure of a body (body). In the illustrated example, information of three subtitles, which are a subtitle 1 (subtitle 1), a subtitle 2 (subtitle 2), and a subtitle 3 (subtitle 3), is included. In each subtitle, text data is written in addition to a display start timing and a display end timing. For example, regarding the subtitle 1 (subtitle 1), the display start timing is set to "T1", the display end timing is set to "T3", and the text data is set to "ABC".

Referring back to Fig. 2, the subtitle encoder 108 converts TTML obtained in the text format conversion unit 107 into various types of segments, and generates a subtitle stream SS composed of a PES packet in which segments are provided in its payload.

Fig. 12 illustrates an exemplary configuration of a PES packet. A PES header (PES header) includes a presentation time stamp (PTS). The PES data payload (PES data payload) includes segments of APTS (abstract_parameter_TimedText_segment), THMS (text_header_metadata_segment), THSS (text header styling segment), THSES (text_header_styling_extension_segment), THLS (text_header_layout_segment), and TBS (text_body_segment).

Here, the PES data payload (PES data payload) may include segments of APTS (abstract_parameter_TimedText_segment), THAS (text_header_all_segment), and TBS (text_body_segment) . Further, the PES data payload (PES data payload) may include segments of APTS (abstract_parameter_TimedText_segment) and TWS (text_whole_segment).

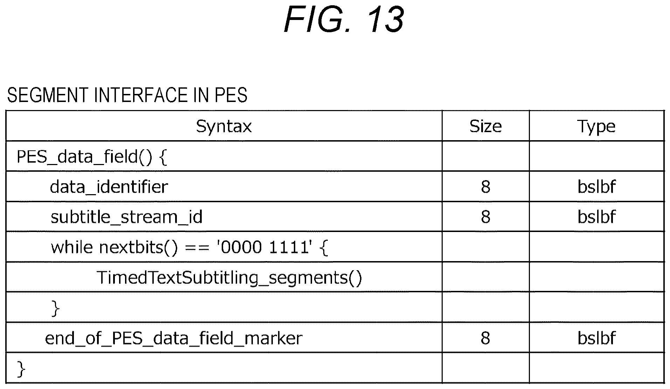

Fig. 13 illustrates a segment interface inside the PES. "PES_data_field" indicates a container part of the PES data payload in the PES packet. An 8-bit field in "data_identifier" indicates an ID that identifies a type of data to be transmitted in the above container part. It is assumed that a conventional subtitle (in a case of bitmap) is indicated by "0×20" and, in a case of text, a new value, "0×21" for example, may be used to identify.

An 8-bit field in "subtitle_stream_id" indicates an ID that identifies a type of the subtitle stream. In a case of a subtitle stream for transmitting text information, a new value, "0×01" for example, can be set to distinguish from a subtitle stream "0×00" for transmitting conventional bitmap.

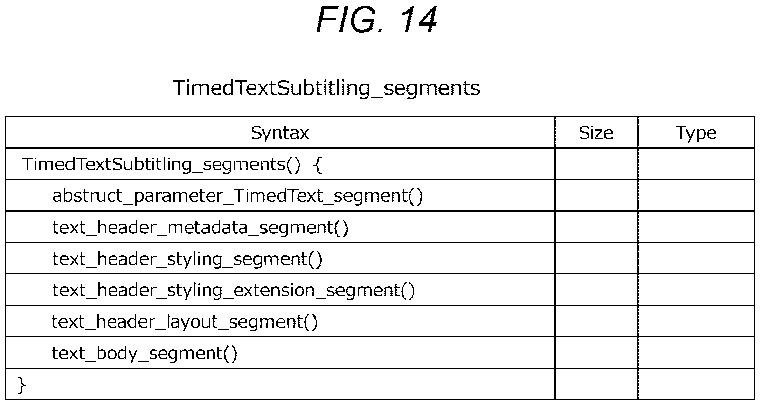

In a "TimedTextSubtitling_segments()" field, a group of segments are provided. Fig. 14 illustrates an exemplary structure of "TimedTextSubtitling_segments()" in a case where segments of APTS (abstract_parameter_TimedText_segment), THMS (text_header_metadata_segment), THSS (text header styling segment), THSES (text_header_styling_extension_segment), THLS (text_header_layout_segment), and TBS (text_body_segment) are provided in the PES data payload.

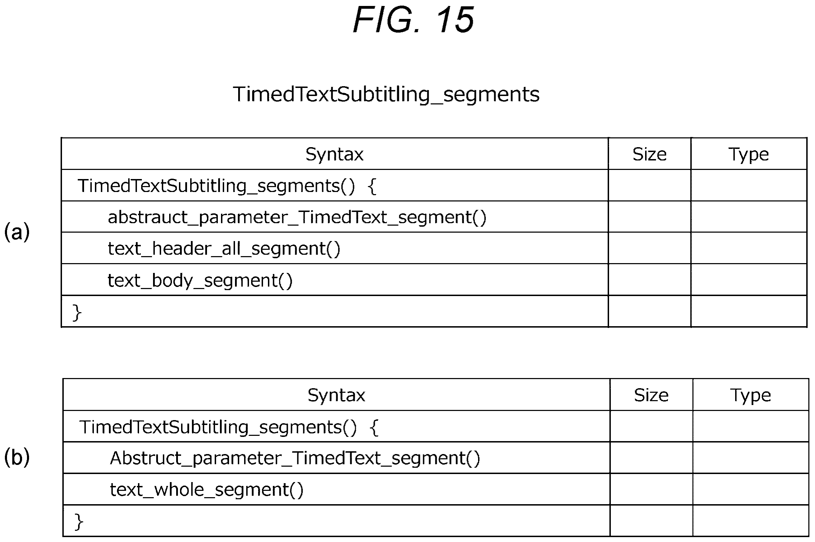

Fig. 15(a) illustrates an exemplary structure of "TimedTextSubtitling_segments()" in a case where segments of APTS (abstract_parameter_TimedText_segment), THAS (text_header_all_segment), and TBS (text_body_segment) are provided in the PES data payload. Fig. 15(b) illustrates an exemplary structure of "TimedTextSubtitling_segments()" in a case where segments of APTS (abstract_parameter_TimedText_segment) and TWS (text_whole_segment) are provided in the PES data payload.

Here, it is flexible whether to insert each segment to a subtitle stream and, for example, in a case where there is no change other than the display subtitle, only two segments of APTS (abstract_parameter_TimedText_segment) and TBS (text_body_segment) are included. In both cases, in the PES data payload, a segment of APTS having abstract information is provided in the beginning, followed by other segments. With such an arrangement, in the reception side, the segments of the abstract information are easily and efficiently extracted from the subtitle stream.

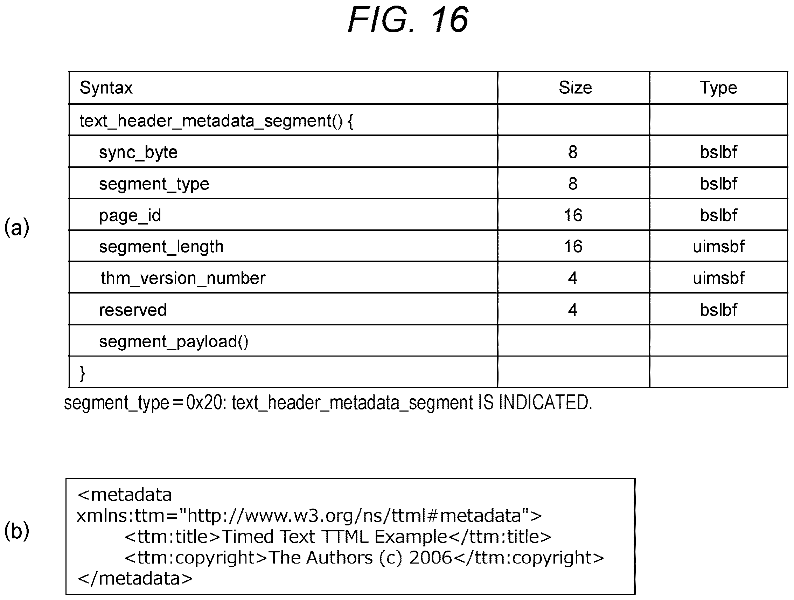

Fig. 16 (a) illustrates an exemplary structure (syntax) of THMS (text_header_metadata_segment). This structure includes information of "sync_byte", "segment_type", "page_id", "segment_length", "thm_version_number", and "segment_payload()". The "segment_type" is 8-bit data that indicates a segment type and set as "0×20" that indicates THMS in this case for example. The "segment_length" is 8-bit data that indicates a length (size) of the segment. In the "segment_payload()", metadata as illustrated in Fig. 16(b) is provided as XML information. This metadata is same as an element of the metadata (metadata) in the TTML header (head) (see Fig. 7).

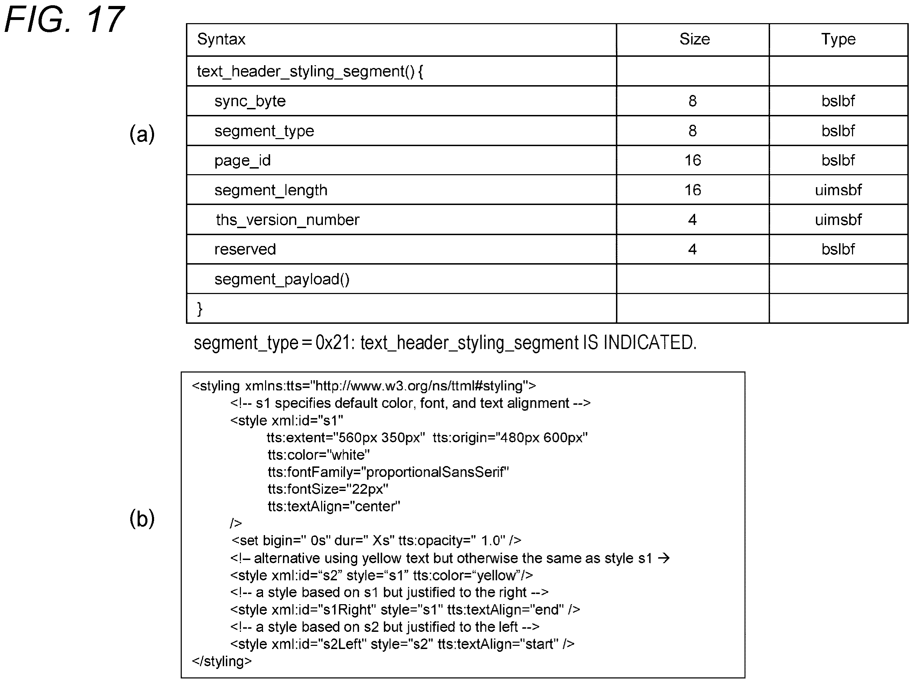

Fig. 17 (a) illustrates an exemplary structure (syntax) of THSS (text_header_styling_segment). This structure includes information of "sync_byte", "segment_type", "page_id", "segment_length", "ths_version_number", and "segment_payload()". The "segment_type" is 8-bit data that indicates a segment type and set as "0×21" that indicates THSS in this case for example. The "segment_length" is 8-bit data that indicates a length (size) of the segment. In the "segment_payload()", metadata as illustrated in Fig. 17(b) is provided as XML information. This metadata is same as an element of the styling (styling) in the TTML header (head) (See Fig. 8(a)).

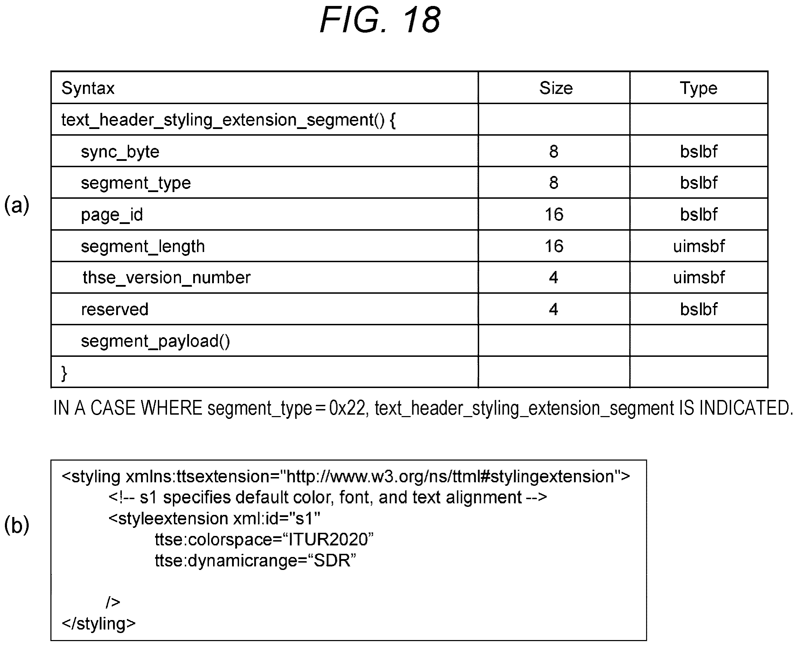

Fig. 18 (a) illustrates an exemplary structure (syntax) of THSES (text_header_styling_extension_segment). This structure includes information of "sync_byte", "segment_type", "page_id", "segment_length", "thse_version_number", and "segment_payload()". The "segment_type" is 8-bit data that indicates a segment type and set as "0×22" that indicates THSES in this case for example. The "segment_length" is 8-bit data that indicates a length (size) of the segment. In the "segment_payload()", metadata as illustrated in Fig. 18(b) is provided as XML information. This metadata is same as an element of a styling extension (styling_extension) in the TTML header (head) (see Fig. 9(a)).

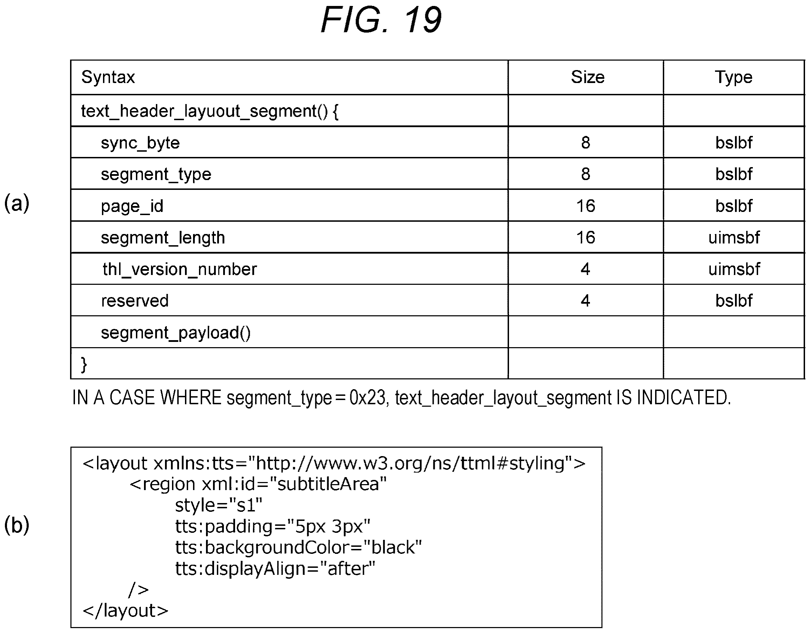

Fig. 19(a) illustrates an exemplary structure (syntax) of THLS (text_header_layout_segment). This structure includes information of "sync_byte", "segment_type", "page_id", "segment_length", "thl_version_number", and "segment_payload()". The "segment_type" is 8-bit data that indicates a segment type and set as "0×23" that indicates THLS in this case for example. The "segment_length" is 8-bit data that indicates a length (size) of the segment. In the "segment_payload()", metadata as illustrated in Fig. 19(b) is provided as XML information. This metadata is same as an element of a layout (layout) in the TTML header (head) (see Fig. 10).

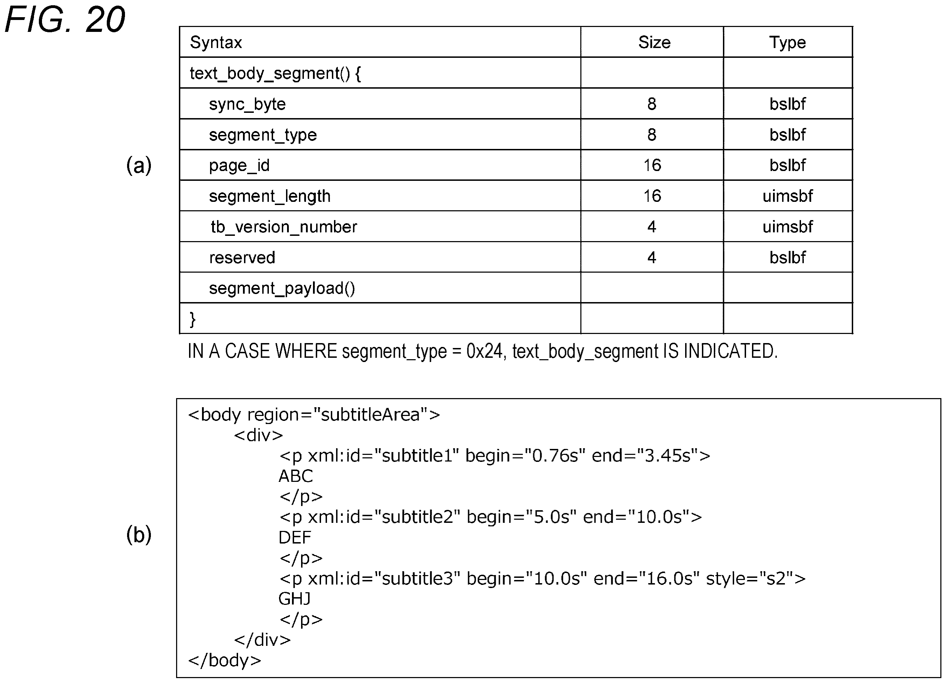

Fig. 20 (a) illustrates an exemplary structure (syntax) of TBS (text_body_segment). This structure includes information of "sync_byte", "segment_type", "page_id", "segment_length", "tb_version_number", and "segment_payload()". The "segment_type" is 8-bit data that indicates a segment type and set as "0×24" that indicates TBS in this case for example. In the "segment_payload()", metadata as illustrated in Fig. 20(b) is provided as XML information. This metadata is same as the TTML body (body) (see Fig. 11).

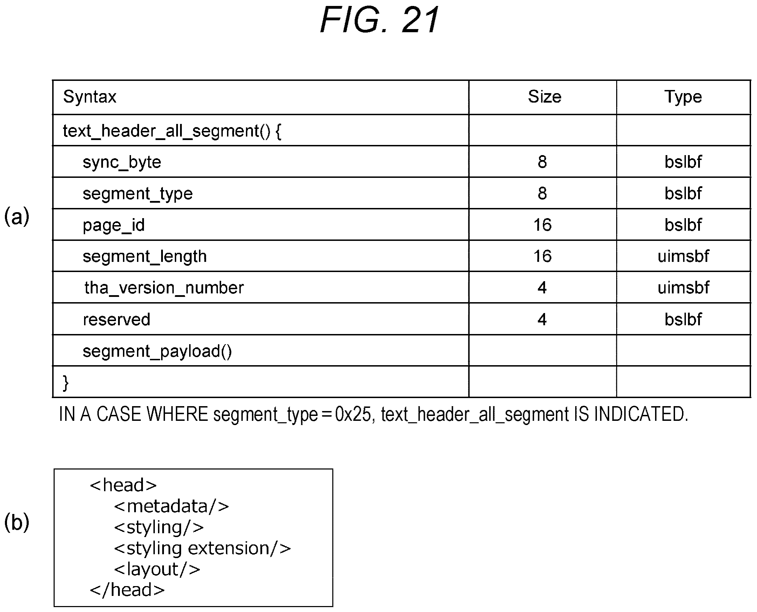

Fig. 21(a) illustrates an exemplary structure (syntax) of THAS (text_header_all_segment). This structure includes information of "sync_byte", "segment_type", "page_id", "segment_length", "tha_version_number", and "segment_payload()". The "segment_type" is 8-bit data that indicates a segment type and set as "0×25" that indicates THAS in this case for example. The "segment_length" is 8-bit data that indicates a length (size) of the segment. In the "segment_payload()", metadata as illustrated in Fig. 21(b) is provided as XML information. This metadata is the entirety of the header (head).

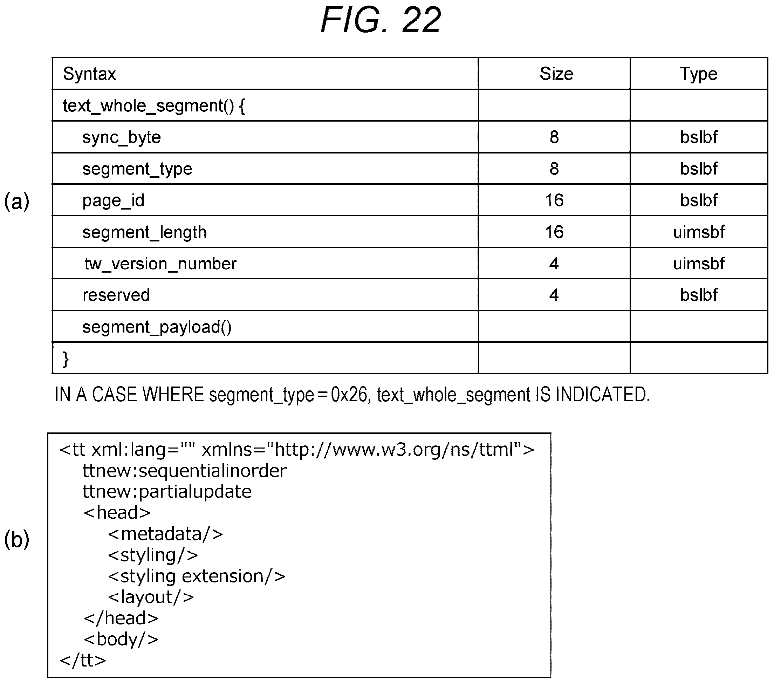

Fig. 22 (a) illustrates an exemplary structure (syntax) of TWS (text whole segment). This structure includes information of "sync_byte", "segment_type", "page_id", "segment_length", "tw_version_number", and "segment_payload()". The "segment_type" is 8-bit data that indicates a segment type and set as "0×26" that indicates TWS in this case for example. The "segment_length" is 8-bit data that indicates a length (size) of the segment. In the "segment_payload()", metadata as illustrated in Fig. 22(b) is provided as XML information. This metadata is the entirety of TTML (see Fig. 5). This structure is a structure to maintain compatibility of the entire TTML and to provide the entire TTML in a single segment.

In this manner, in a case where all the elements of TTML are transmitted in a single segment, as illustrated in Fig. 22(b), two new elements of "ttnew:sequentialinorder" and "ttnew:partialupdate" are inserted in the layer of the elements . It is noted that these new elements do not have to be inserted at the same time.

The "ttnew:sequentialinorder" composes information related to an order of TTML transmission. This "ttnew:sequentialinorder" is provided in front of <head>. "ttnew:sequentialinorder=true (=1)" indicates that there is a restriction related to the transmission order. In this case, it is indicated in <head> that <metadata>, <styling>, <styling extension>, and <layout> are provided in order, followed by "<div>, and <p> text </p> </div>", which are included in <body>. Here, in a case where <styling extension> does not exist, the order is <metadata>, <styling>, and <layout>. On the other hand, the "ttnew:sequentialinorder=false (=0)" indicates that there is not the above described restriction.

Since the element of "ttnew:sequentialinorder" is inserted in this manner, the order of TTML transmission can be recognized in the reception side and this helps to confirm that the TTML transmission is performed according to a predetermined order, simplify the processes up to decoding, and efficiently perform the decoding process even in a case where all elements of TTML are transmitted at once.

Further, the "ttnew:partialupdate" composes information as to whether there is an update of a TTML. This "ttnew:partialupdate" is provided before <head>. "ttnew:partialupdate=true (=1)" is used to indicate that there is an update of one of the elements in <head> before <body>. On the other hand, "ttnew:partialupdate=false (=0)" is used to indicate that there is not the above described update. Since an element of "ttnew:sequentialinorder" is inserted in this manner, the reception side can easily recognize whether there is an update of the TTML.

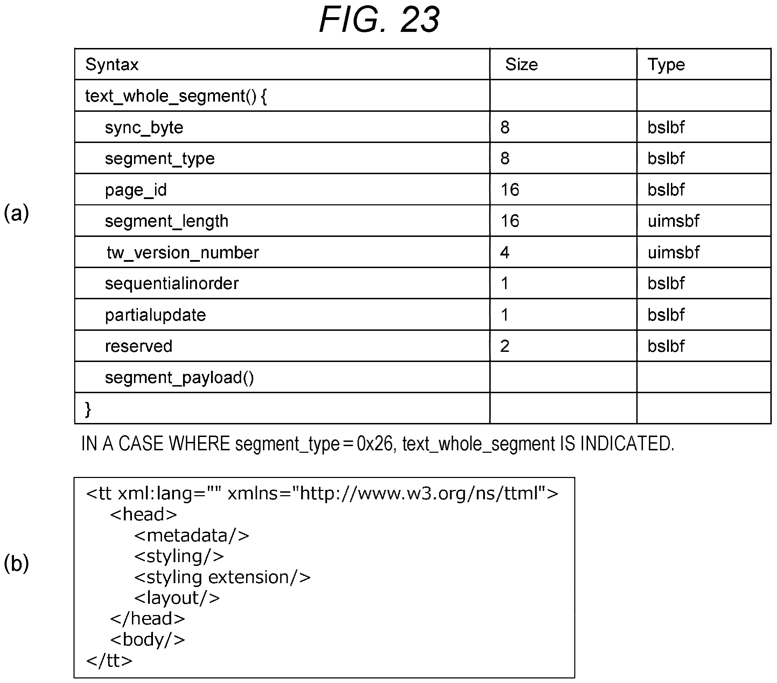

Here, an example in which two new elements of "ttnew:sequentialinorder" and "ttnew:partialupdate" are inserted to the element layer has been described above. However, an example may be considered that those new elements are inserted to the layer of the segment as illustrated in Fig. 23(a). Fig. 23(b) illustrates metadata (XML information) provided in "segment_payload()" in such a case.

### (Segment of APTS (abstract_parameter_TimedText_segment))

Here a segment of APTS (abstract_parameter_TimedText_segment) will be described. The APTS segment includes abstract information. The abstract information includes information related to a part of pieces of information indicated by TTML.

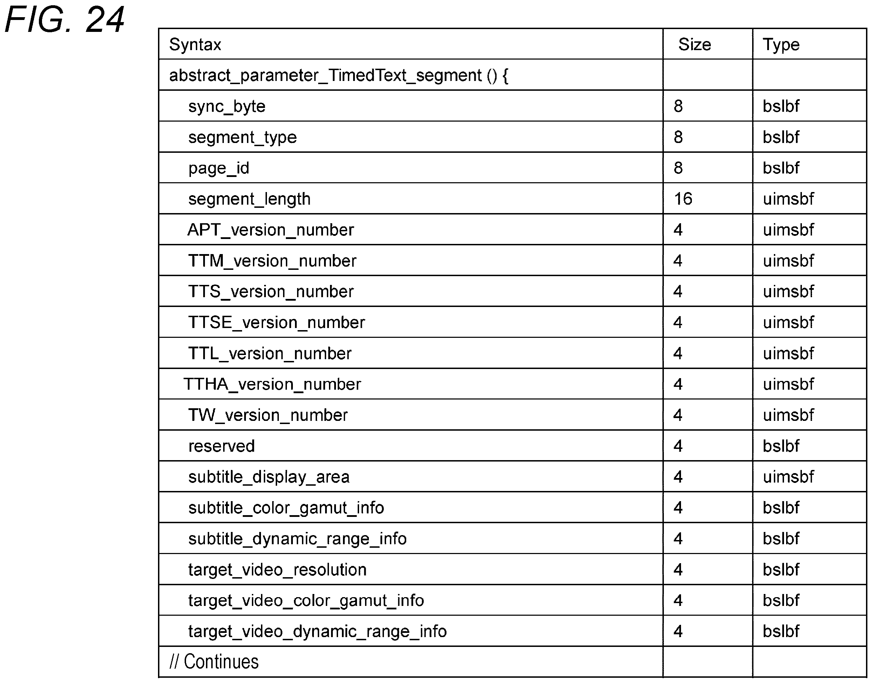

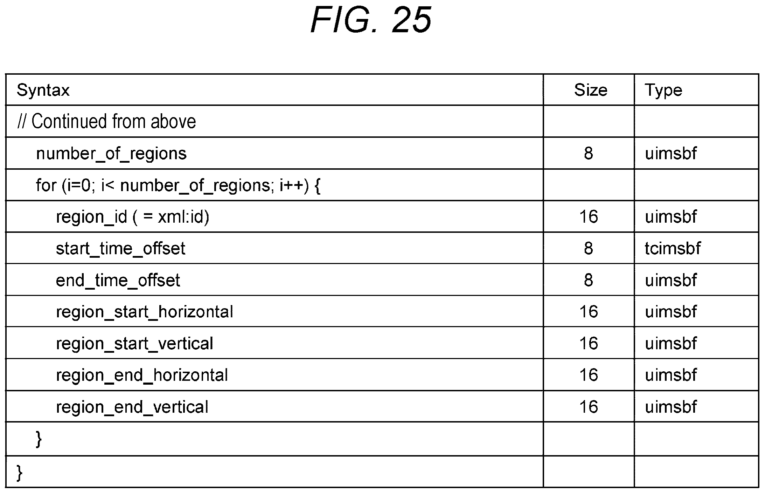

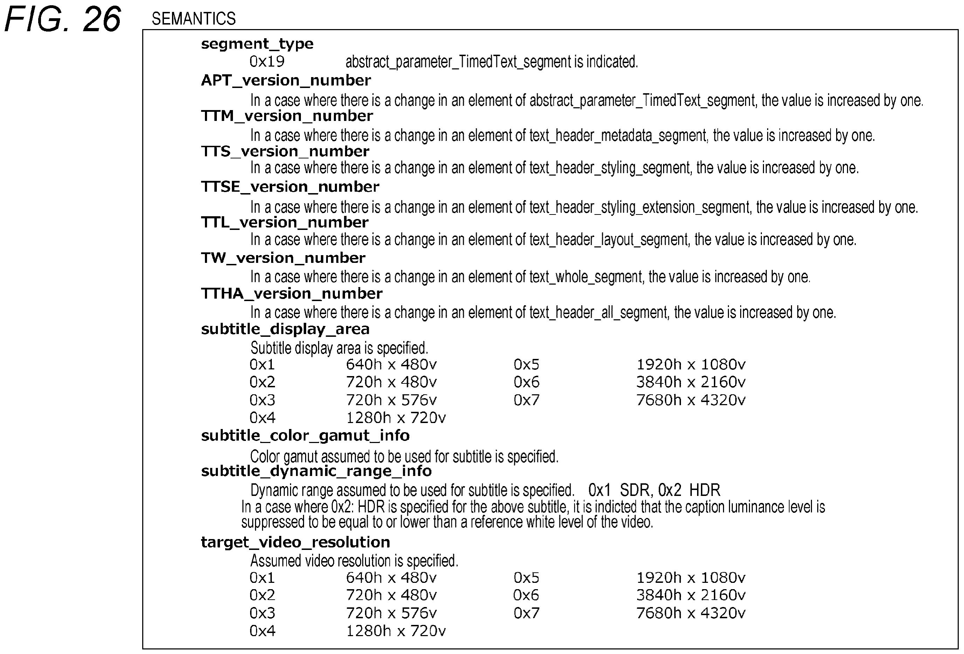

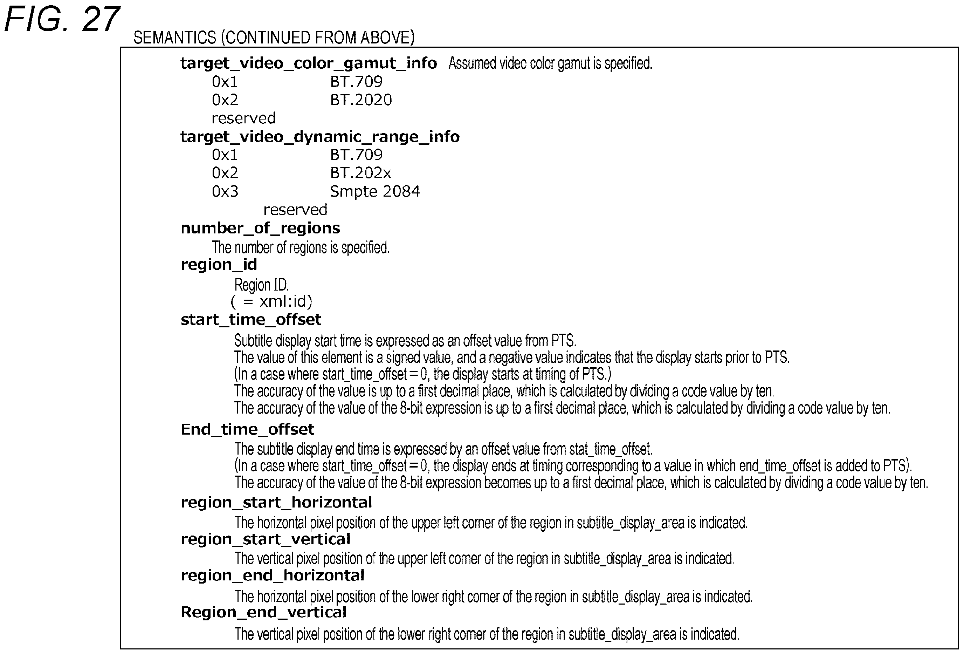

Figs. 24 and 25 illustrate an exemplary structure (syntax) of APTS (abstract_parameter_TimedText_segment). Figs. 26 and 27 illustrate the contents (Semantics) of major information in the exemplary structure. This structure includes information of "sync_byte", "segment_type", "page_id", and "segment_length", similarly to other segments. "segment_type" is 8-bit data that indicates a segment type and set as "0×19" that indicates APTS in this case for example. "segment_length" is 8-bit data that indicates a length (size) of the segment.

The 4-bit field in "APT_version_number" indicates whether or not there is a change in the element in the APTS (abstract_parameter_TimedText_segment) from the previously transmitted content and, in a case where there is a change, its value is increased by one. The 4-bit field in "TTM_version_number" indicates whether or not there is a change in the element in THMS (text_header_metadata_segment) from the previously transmitted content and, in a case where there is a change, its value is increased by one. The 4-bit field in "TTS_version_number" indicates whether or not there is a change in the element in THSS (text_header_styling_segment) from the previously transmitted content and, in a case where there is a change, its value is increased by one.

The 4-bit field in "TTSE_version_number" indicates whether or not there is a change in the element in THSES (text_header_styling_extension_segment) from the previously transmitted content and, in a case where there is a change, its value is increased by one. The 4-bit field in "TTL_version_number" indicates whether or not there is a change in the element in THLS (text_header_layout_segment) from the previously transmitted content and, in a case where there is a change, its value is increased by one.

The 4-bit field in "TTHA_version_number" indicates whether or not there is a change in the element in THAS (text_header_all_segment) from the previously transmitted content and, in a case where there is a change, its value is increased by one. The 4-bit field in "TW_version_number" indicates whether or not there is a change in the element in TWS (text whole segment) from the previously transmitted content and, in a case where there is a change, its value is increased by one.

The 4-bit field in "subtitle_display_area" specifies a subtitle display area (subtitle area). For example, "0×1" specifies 640h*480v, "0×2" specifies 720h*480v, "0×3" specifies 720h*576v, "0×4" specifies 1280h*720v, "0×5" specifies 1920h*1080v, "0×6" specifies 3840h*2160v, and "0×7" specifies 7680h*4320v.

The 4-bit field in "subtitle_color_gamut_info" specifies a color gamut, which is to be used for the subtitle. The 4-bit field in "subtitle_dynamic_range_info" specifies a dynamic range, which is to be used for the subtitle. For example, "0×1" indicates SDR and "0×2" in indicates HDR. In a case where HDR is specified for the subtitle, it is indicated that the luminance level of the subtitle is assumed to be suppressed equal to or lower than a reference white level of a video.

The 4-bit field in "target_video_resolution" specifies an assumed resolution of the video. For example, "0×1" specifies 640h*480v, "0×2" specifies 720h*480v, "0×3" specifies 720h*576v, "0×4" specifies 1280h*720v, "0×5" specifies 1920h*1080v, "0×6" specifies 3840h*2160v, and "0×7" specifies 7680h*4320v.

The 4-bit field in "target_video_color_gamut_info" specifies an assumed color gamut of the video. For example, "0×1" indicates "BT.709" and "0×2" indicates "BT.2020". The 4-bit field in "target_video_dynamic_range_info" specifies an assumed dynamic range of the video. For example, "0×1" indicates "BT.709", "0×2" indicates "BT.202x", and "0×3" indicates "Smpte 2084".

The 4-bit field in "number_of_regions" specifies a number of regions. According to the number of the regions, the following fields are repeatedly provided. The 16-bit field in "region_id" indicates an ID of a region.

The 8-bit field in "start_time_offset" indicates a subtitle display start time as an offset value from the PTS. The offset value of "start_time_offset" is a signed value, and, a negative value expresses to start to display at timing earlier than the PTS. In a case where the offset value of this "start_time_offset" is zero, it indicates to start the display at timing of the PTS. A value in the case of an 8-bit expression is accurate up to a first decimal place, which is calculated by dividing a code value by ten.

The 8-bit field in "end_time_offset" indicates a subtitle display end time as an offset value from "start_time_offset". This offset value indicates a display period. When the offset value of the above "start_time_offset" is zero, the display is ended at timing of a value in which the offset value of "end_time_offset" is added to the PTS. The value of an 8-bit expression is accurate up to a first decimal place, which is calculated by dividing a code value by ten.

Here, "start_time_offset" and "end_time_offset" may be transmitted with an accuracy of 90 kHz, same as the PTS. In this case, a 32-bit space is maintained for the respective fields of "start_time_offset" and "end_time_offset".

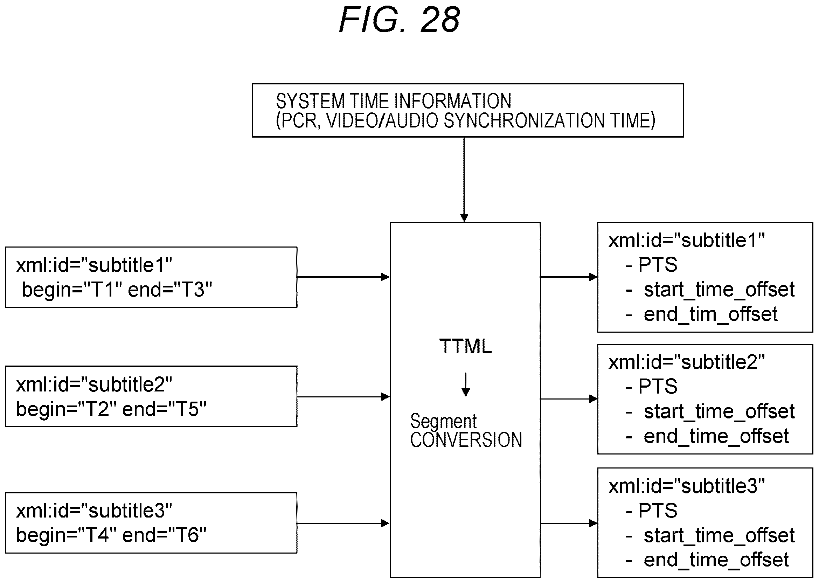

As illustrated in Fig. 28, in a case where TTML is converted into a segment (Segment), the subtitle encoder 108 refers to system time information (PCR, video/audio synchronization time) on the basis of the description of display start timing (begin) and display end timing (end) of each subtitle included in the body (body) of TTML, and sets "PTS", "start_time_offset", and "end_time_offset" of each subtitle. In this case, the subtitle encoder 108 may set "PTS", "start_time_offset", and "end_time_offset" by using a decoder buffer model, as verifying the operation in the reception side is performed correctly.

The 16-bit field in "region_start_horizontal" indicates a horizontal pixel position of an upper left corner (See point P in Fig. 8 (b)) of a region in a subtitle display area specified by the above "subtitle_display_area". The 16-bit field in "region_start_vertical" indicates a vertical pixel position of the upper left corner of the region in the subtitle display area. The 16-bit field in "region_end_horizontal" indicates a horizontal pixel position of a lower right corner (see point Q in Fig. 8(b)) of the region in the subtitle display area. The 16-bit field in "region_end_vertical" indicates a vertical pixel position of the lower right corner of the region in the subtitle display area.

Referring back to Fig. 2, the system encoder 109 generates a transport stream TS including a video stream VS generated in the video encoder 105 and a subtitle stream SS generated in the subtitle encoder 108. The transmission unit 110 transmits the transport stream TS to the reception device 200 over airwaves or a packet on a network.

An operation of the transmission device 100 of Fig. 2 will be briefly described. The video data (image data) captured and obtained in the camera 102 is provided to the video photoelectric conversion unit 103. The video photoelectric conversion unit 103 performs a photoelectric conversion on the video data obtained in the camera 102 and obtains transmission video data V1.

In this case, in a case where the video data is SDR video data, the photoelectric conversion is performed as applying an SDR photoelectric conversion characteristic, and SDR transmission video data (transmission video data having the SDRphotoelectric conversion characteristic) isobtained. On the other hand, in a case where the video data is HDR video data, the photoelectric conversion is performed as applying an HDR photoelectric conversion characteristic, and HDR transmission video data (transmission video data having the HDR photoelectric conversion characteristic) is obtained.

The transmission video data V1 obtained in the video photoelectric conversion unit 103 is converted from an RGB domain into YCbCr (luminance/chrominance) domain in the RGB/YCbCr conversion unit 104 and then provided to the video encoder 105. The video encoder 105 encodes the transmission video data V1 with MPEG4-AVC, HEVC, or the like for example and generates a video stream (PES stream) VS including the encoded video data.

Further, the video encoder 105 inserts, into a VUI region of an SPS NAL unit in an access unit (AU), meta-information such as information (transfer function) that indicates an electric-photo conversion characteristic corresponding to the photoelectric conversion characteristic of the transmission video data V1, information that indicates a color gamut of the transmission video data V1, and information that indicates a reference level.

Further, the video encoder 105 inserts, into a portion "SEIs" of the access unit (AU), a newly defined dynamic range/SEI message (see Fig. 4), which has meta-information such as information (transfer function) that indicates an electric-photo conversion characteristic corresponding to the photoelectric conversion characteristic of the transmission video data V1 and information of a reference level.

The subtitle generation unit 106 generates text data (character code) DT as subtitle information. The text data DT is provided to the text format conversion unit 107. The text format conversion unit 107 converts the text data DT into subtitle text information having display timing information, which is TTML (see Figs. 3 and 4). The TTML is provided to the subtitle encoder 108.

The subtitle encoder 108 converts TTML obtained in the text format conversion unit 107 into various types of segments, and generates a subtitle stream SS, which is composed of a PES packet including a payload in which those segments are provided. In this case, in the payload of the PES packet, APTS segments (see Figs. 24 to 27) having abstract information are firstly provided, followed by segments having subtitle text information (see Fig. 12).

The video stream VS generated in the video encoder 105 is provided to the system encoder 109. The subtitle stream SS generated in the subtitle encoder 108 is provided to the system encoder 109. The system encoder 109 generates a transport stream TS including a video stream VS and a subtitle stream SS. The transport stream TS is transmitted to the reception device 200 by the transmission unit 110 over airwaves or a packet on a network.

### (Exemplary configuration of reception device)

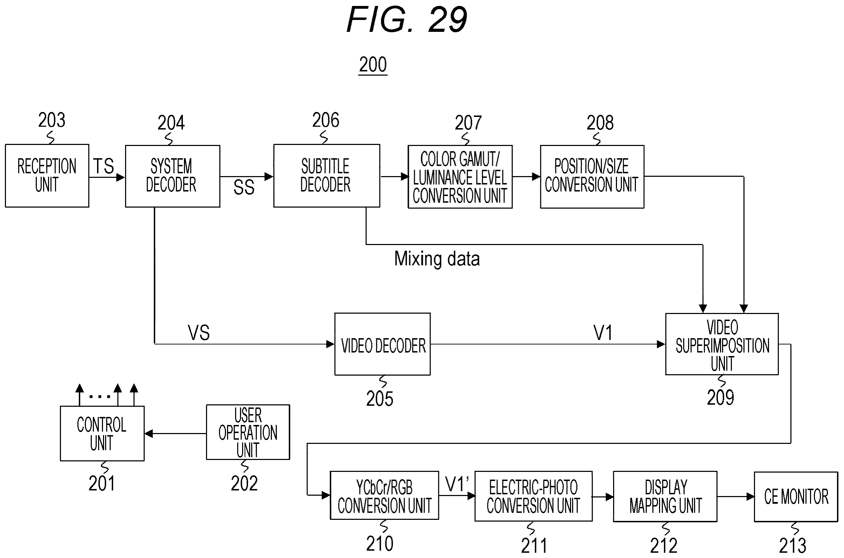

Fig. 29 illustrates an exemplary configuration of a reception device 200. The reception device 200 includes a control unit 201, a user operation unit 202, a reception unit 203, a system decoder 204, a video decoder 205, a subtitle decoder 206, a color gamut/luminance level conversion unit 207, and a position/size conversion unit 208. Further, the reception device 200 includes a video superimposition unit 209, a YCbCr/RGB conversion unit 210, an electric-photo conversion unit 211, a display mapping unit 212, and a CE monitor 213.

The control unit 201 has a central processing unit (CPU) and controls operation of each unit in the reception device 200 on the basis of a control program. The user operation unit 202 is a switch, a touch panel, a remote control transmission unit, or the like, which are used by a user such as a viewer to perform various operation. The reception unit 203 receives a transport stream TS transmitted from the transmission device 100 over airwaves or a packet on a network.

The system decoder 204 extracts a video stream VS and a subtitle stream SS from the transport stream TS. Further, the system decoder 204 extracts various types of information inserted in a transport stream TS (container) and transmits the information to the control unit 201.

The video decoder 205 performs a decode process on the video stream VS extracted in the system decoder 204 and outputs transmission video data V1. Further, the video decoder 205 extracts a parameter set and an SEI message, which are inserted in each access unit composing the video stream VS and transmits the parameter set and the SEI message to the control unit 201.

In the VUI region of the SPS NAL unit, information (transfer function) that indicates an electric-photo conversion characteristic corresponding to the photoelectric conversion characteristic of the transmission video data V1, information that indicates a color gamut of the transmission video data V1, and information that indicates a reference level, or the like is inserted. Further, the SEI message also includes a dynamic range/SEI message (see Fig. 4) including information (transfer function) that indicates an electric-photo conversion characteristic corresponding to the photoelectric conversion characteristic of the transmission video data V1, information of a reference level, and the like.

The subtitle decoder 206 processes segment data in each region included in the subtitle stream SS and outputs bitmap data in each region, which is to be superimposed on video data. Further, the subtitle decoder 206 extracts abstract information included in an APTS segment and transmits the abstract information to the control unit 201.

The abstract information includes subtitle display timing information, subtitle display control information (information of a display position, a color gamut and a dynamic range of the subtitle), and also subject video information (information of a resolution, a color gamut, and a dynamic range) or the like.

Here, since the display timing information and display control information of the subtitle are included in XML information provided in "segment_payload()" of a segment other than APTS, the display timing information and display control information of the subtitle may be obtained by scanning the XML information; however, the display timing information and display control information of the subtitle can be easily obtained only by extracting abstract information from an APTS segment. Here, the information of the subject video (information of a resolution, a color gamut, and a dynamic range) can be obtained from the system of a video stream VS; however, the information of the subject video can be easily obtained only by extracting abstract information from the APTS segment.

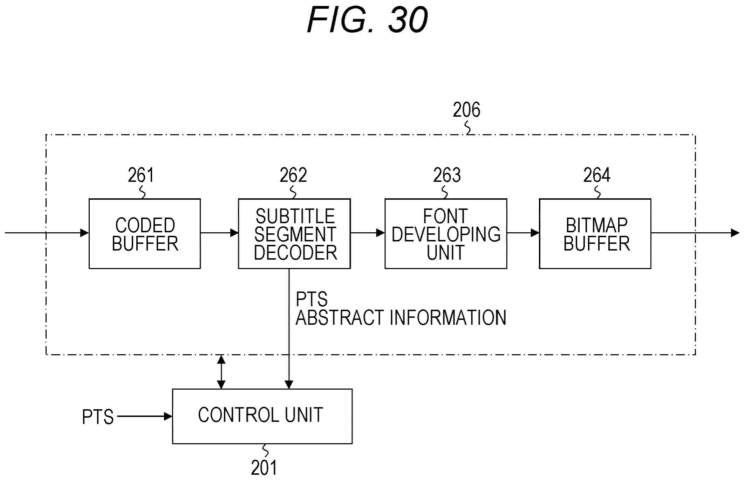

Fig. 30 illustrates an exemplary configuration of the subtitle decoder 206. The subtitle decoder 206 includes a coded buffer 261, a subtitle segment decoder 262, a font developing unit 263, and a bitmap buffer 264.

The coded buffer 261 temporarily stores a subtitle stream SS. The subtitle segment decoder 262 performs a decoding process on segment data in each region stored in the coded buffer 261 at predetermined timing and obtains text data and a control code of each region.

The font developing unit 263 develops a font on the basis of the text data and control code of each region obtained by the subtitle segment decoder 262 and obtains subtitle bitmap data of each region. In this case, the font developing unit 263 uses, as location information of each region, location information ("region_start_horizontal", "region_start_vertical", "region_end_horizontal", and "region_end_vertical") included in the abstract information for example.

The subtitle bitmap data is obtained in the RGB domain. Further, it is assumed that the color gamut of the subtitle bitmap data corresponds to the color gamut indicated by the subtitle color gamut information included in the abstract information. Further, it is assumed that the dynamic range of the subtitle bitmap data corresponds to the dynamic range indicated by the subtitle dynamic range information included in the abstract information.

For example, in a case where the dynamic range information is "SDR", it is assumed that the subtitle bitmap data has a dynamic range of SDR and a photoelectric conversion has been performed as applying an SDR photoelectric conversion characteristic. Further, for example, in a case where the dynamic range information is "HDR", it is assumed that the subtitle bitmap data has a dynamic range of HDR and photoelectric conversion has been performed as applying an HDR photoelectric conversion characteristic. In this case, the luminance level is limited up to the HDR reference level assuming a superimposition on an HDR video.

The bitmap buffer 264 temporarily stores bitmap data of each region obtained by the font developing unit 263. The bitmap data of each region stored in the bitmap buffer 264 is read from the display start timing and superimposed on image data, and this process continues only during the display period.

Here, the subtitle segment decoder 262 extracts the PTS from the PES header of the PES packet. Further, the subtitle segment decoder 262 extracts abstract information from the APTS segment. These pieces of information are transmitted to the control unit 201. The control unit 201 controls timing to read the bitmap data of each region from the bitmap buffer 264 on the basis of the PTS and the information of "start_time_offset" and "end_time_offset" included in the abstract information.

Referring back to Fig. 29, under the control by the control unit 201, the color gamut/luminance level conversion unit 207 modifies the color gamut of the subtitle bitmap data to fit the color gamut of the video data, on the basis of color gamut information ("subtitle_color_gamut_info") of the subtitle bitmap data and color gamut information ("target_video_color_gamut_info") of the video data. Further, under the control by the control unit 201, the color gamut/luminance level conversion unit 207 adjusts a maximum level of a luminance level of the subtitle bitmap data to be lower than a reference level of a luminance level of the video data on the basis of the dynamic range information ("subtitle_dynamic_range_info") of the subtitle bitmap data and the dynamic range information ("target_video_dynamic_range_info") of the video data.

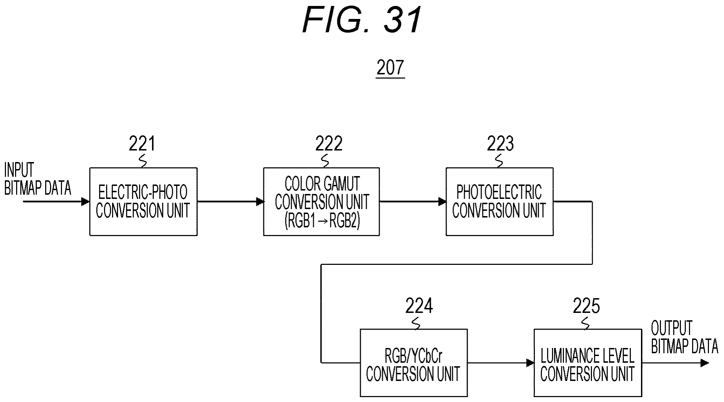

Fig. 31 illustrates an exemplary configuration of acolor gamut/luminance level conversion unit 207. The color gamut luminance level conversion unit 210 includes an electric-photo conversion unit 221, a color gamut conversion unit 222, a photoelectric conversion unit 223, a RGB/YCbCr conversion unit 224, and a luminance level conversion unit 225.

The electric-photo conversion unit 221 performs a photoelectric conversion on the input subtitle bitmap data. Here, in a case where the dynamic range of the subtitle bitmap data is SDR, the electric-photo conversion unit 221 performs an electric-photo conversion as applying an SDR electric-photo conversion characteristic to generate a linear state. Further, in a case where the dynamic range of the subtitle bitmap data is HDR, the electric-photo conversion unit 221 performs an electric-photo conversion as applying an HDR electric-photo conversion characteristic to generate a linear state. Here, the input subtitle bitmap data may be in a linear state without a photoelectric conversion. In this case, the electric-photo conversion unit 221 is not needed.

The color gamut conversion unit 222 modifies the color gamut of the subtitle bitmap data output from the electric-photo conversion unit 221 to fit the color gamut of the video data. For example, in a case where the color gamut of the subtitle bitmap data is "BT.709" and the color gamut of the video data is "BT.2020", the color gamut of the subtitle bitmap data is converted from "BT.709" to "BT.2020". Here, in a case where the color gamut of the subtitle bitmap data is same as the color gamut of the video data, the color gamut conversion unit 222 practically does not perform any process and outputs the input subtitle bitmap data as it is.

The photoelectric conversion unit 223 performs a photoelectric conversion on the subtitle bitmap data output from the color gamut conversion unit 222, as applying a photoelectric conversion characteristic which is the same as the photoelectric conversion characteristic applied to the video data. The RGB/YCbCr conversion unit 224 converts the subtitle bitmap data output from the photoelectric conversion unit 223 from RGB domain to YCbCr (luminance/chrominance) domain.

The luminance level conversion unit 225 obtains output bitmap data by adjusting the subtitle bitmap data output from the RGB/YCbCr conversion unit 224 so that the maximum level of the luminance level of the subtitle bitmap data becomes equal to or lower than the luminance reference level of the video data or a reference white level. In this case, in a case where the luminance level of the subtitle bitmap data is already adjusted as considering rendering to HDR video, the input subtitle bitmap data is output as it is practically without being performed with any process if the video data is HDR.

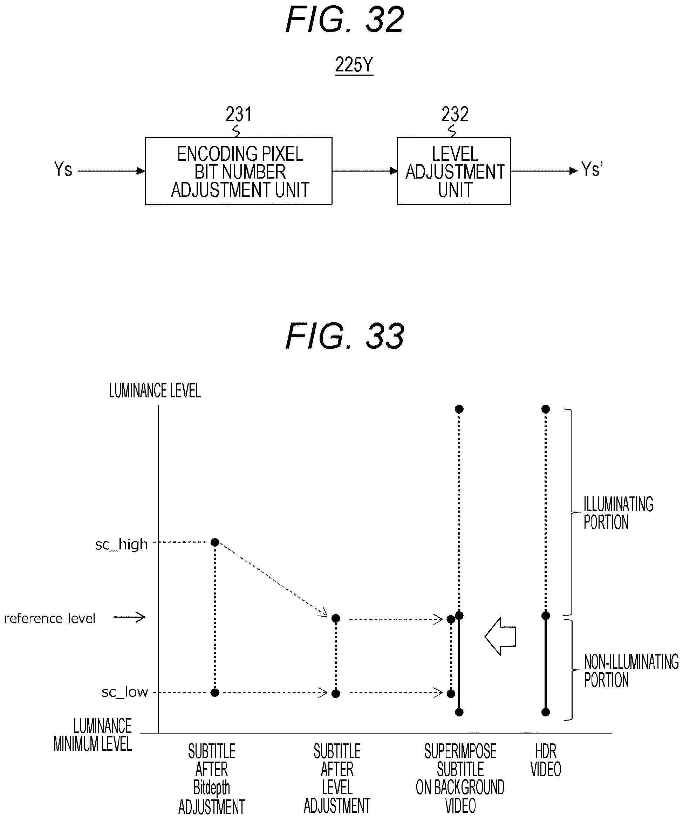

Fig. 32 illustrates an exemplary configuration of a component part 225Y of a luminance level signal Y included in the luminance level conversion unit 225. The component part 225Y includes an encoding pixel bit depth adjustment unit 231 and a level adjustment unit 232.

The encoding pixel bit depth adjustment unit 231 modifies the encoding pixel bit depth of the luminance level signal Ys of the subtitle bitmap data to fit to the encoding pixel bit depth of the video data. For example, in a case where the encoding pixel bit depth of the luminance level signal Ys is "8bits" and the encoding pixel bit depth of the video data is "10bits", the encoding pixel bit depth of the luminance level signal Ys is converted from "8bits" to "10bits". The level adjustment unit 232 generates an output luminance level signal Ys' by adjusting the luminance level signal Ys in which the encoding pixel bit depth is made to fit so that the maximum level of the luminance level signal Ys becomes equal to or lower than the luminance reference level of the video data or a reference white level.

Fig. 33 schematically illustrates operation of the component part 225Y illustrated in Fig. 32. The illustrated example is a case where the video data is HDR. The reference level (reference level) corresponds to a border between a non-illuminating portion and an illuminating portion.

The reference level exists between a maximum level (sc_high) and a minimum level (sc_low) of the luminance level signal Ys after the encoding pixel bit depth is made to fit. In this case, the maximum level (sc_high) is adjusted to be equal to or lower than the reference level. Here, in this case, a method to scale down to a linear state for example is employed, since a method of clipping causes a solid white pattern.

In a case where the subtitle bitmap data is superimposed on the video data by adjusting the level of the luminance level signal Ys in this manner, the high image quality can be maintained since the subtitle is prevented from being brightly displayed on the background video.

Here, the above description has described the component part 225Y (see Fig. 32) of the luminance level signal Ys included in the luminance level conversion unit 225. In the luminance level conversion unit 225, only a process to adjust the encoding pixel bit depth to fit to the encoding pixel bit depth of the video data is performed on chrominance signals Cb and Cr. For example, the entire range expressed by the bit width is assumed to be 100%, the median value thereof is set as a reference, and a conversion from an 8-bit space to a 10-bit space is performed so that the amplitude has 50% in a positive direction and 50% in a negative direction from the reference value.

Referring back to Fig. 29, under the control by the control unit 201, the position/size conversion unit 208 performs a location conversion process on the subtitle bitmap data obtained in the color gamut/luminance level conversion unit 207. In a case where the corresponding resolution (indicated by the information of "subtitle_display_area") of the subtitle differs from the resolution ("target_video_resolution") of the video, the position/size conversion unit 208 performs a subtitle location conversion to display the subtitle in a proper location in the background video.

For example, a case where the subtitle is compatible with an HD resolution and the video has a UHD resolution will be explained. In this case, the UHD resolution exceeds the HD resolution and includes a 4K resolution or an 8K resolution.

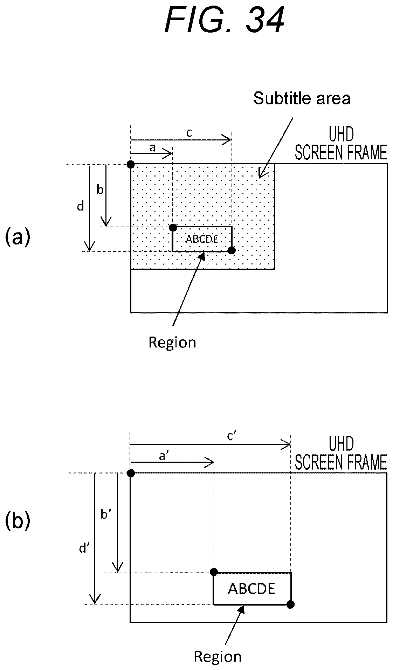

Fig. 34(a) illustrates an example of a case where the video has a UHD resolution and the subtitle is compatible with the HD resolution. The subtitle display area is expressed by the "subtitle area" in the drawing. It is assumed that the location relationship between a "subtitle area" and a video is expressed by reference positions thereof, which is an expression that shares the upper left corners (left-top) thereof. The pixel position of the start point of the region is (a,b) and the pixel position of the end point is (c,d). In this case, since the resolution of the background video is greater than the corresponding resolution of the subtitle, the subtitle display position on the background video is displaced to the right from the location desired by the makers .

Fig. 34(b) illustrates an example of a case that a location conversion process is performed. It is assumed that the pixel position of the start point of the region, which is the subtitle display area, is (a' ,b') and the pixel position of its end point is (c' ,d'). In this case, since the location coordinate of the region before the location conversion is a coordinate in the HD display area, according to the relation with the video screen frame, the location coordinate is converted into a coordinate in the UHD display area on the basis of a ratio of the UHD resolution to the HD resolution. Here, in this example, a subtitle size conversion process is also performed at the same time with the location conversion.

Further, under the control by the control unit 201, the position/size conversion unit 208 performs a subtitle size conversion process on the subtitle bitmap data obtained in the color gamut/luminance level conversion unit 207 in response to an operation by the user such as a viewer or automatically on the basis of the relationship between the video resolution and the corresponding resolution of the subtitle for example.

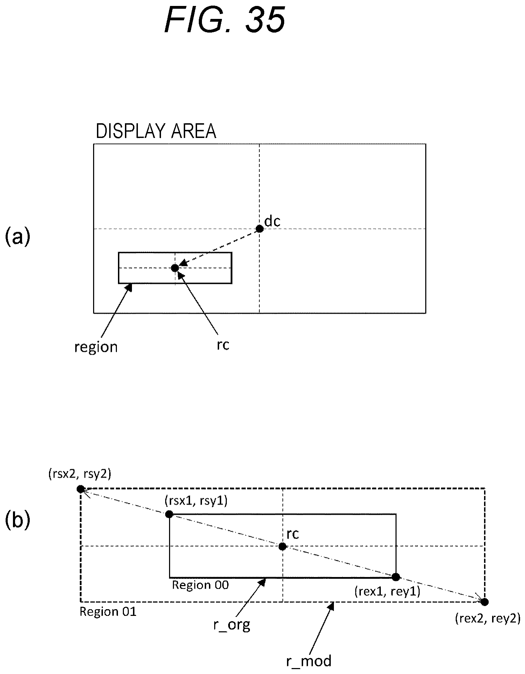

As illustrated in Fig. 35 (a), a distance from a center location (dc: display center) of the display area to a center location of the region (region), that is, a point (region center location: rc) which divides the region into two in horizontal and vertical directions is determined in proportion to the video resolution. For example, in a case where HD is considered as the video resolution and the center location rc of the region is defined on the basis of the center location dc of the subtitle display area and the video resolution is 4K (= 3840 × 2160), the location is controlled so that the distance from dc to rc becomes twice in pixel numbers.

As illustrated in Fig. 35(b), in a case where the size of the region (Region) is changed from r_org (Region 00) to r_mod (Region 01), the start position (rsx1,rsy1) and end position (rex1,rey1) are modified to a start position (rsx2,rsy2) and an end position (rex2,rey2) respectively so that Ratio = (r_mod/r_org) is satisfied.

In other words, proportion between a distance from rc to (rsx2,rsy2) and a distance from rc to (rsx1,rsy1) and a proportion between a distance from rc to (rex2,rey2) and a distance from rc to (rex1,rey1) are adjusted to correspond to the Ratio. This allows a size conversion of the subtitle (region) to be performed as maintaining relative location relationship of the entire display area since the center location rc of the region is kept at the same location even after the size conversion is performed.

Referring back to Fig. 29, the video superimposition unit 209 superimposes subtitle bitmap data output from the position/size conversion unit 208 on the transmission video data V1 output from the video decoder 205. In this case, the video superimposition unit 209 combines the subtitle bitmap data and transmission video data V1 on the basis of a mix ratio indicated by mix ratio information (Mixing data) obtained by the subtitle decoder 206.

The YCbCr/RGB conversion unit 210 converts the transmission video data V1' on which the subtitle bitmap data is superimposed, from YCbCr (luminance/chrominance) domain to RGB domain. In this case, the YCbCr/RGB conversion unit 210 performs the conversion by using a conversion equation corresponding to a color gamut on the basis of the color gamut information.

The electric-photo conversion unit 211 obtains display video data used to display an image by performing an electric-photo conversion on the transmission video data V1' , which is converted to an RGB domain, as applying an electric-photo conversion characteristic corresponding to the photoelectric conversion characteristic which is applied thereto. The display mapping unit 212 adjusts a display luminance level on the display video data according to a maximum luminance level display performance of the CE monitor 213. The CE monitor 213 displays an image on the basis of the display video data, on which the display luminance level adjustment is performed. The CE monitor 213 is composed of a liquid crystal display (LCD), an organic electroluminescence display (organic EL display), and the like for example.

Operation of the reception device 200 illustrated in Fig. 29 will be briefly described. The reception unit 203 receives a transport stream TS, which is transmitted from the transmission device 100 over airwave or a packet on a network. The transport stream TS is provided to the system decoder 204. The system decoder 204 extracts a video stream VS and a subtitle stream SS from the transport stream TS. Further, the system decoder 204 extracts various types of information inserted in the transport stream TS (container) and transmits the information to the control unit 201.

The video stream VS extracted from the system decoder 204 is provided to the video decoder 205. The video decoder 205 performs a decoding process on the video stream VS and obtains a transmission video data V1. Further, the video decoder 205 extracts a parameter set and an SEI message inserted to each access unit, which composes a video stream VS, and transmits the parameter set and SEI message to the control unit 201.

In the VUI region of the SPS NAL unit, information (transfer function) that indicates an electric-photo conversion characteristic corresponding to the photoelectric conversion characteristic of the transmission video data V1, information that indicates a color gamut of the transmission video data V1, and information that indicates a reference level are inserted. Further, the SEI message also includes a dynamic range/SEI message (see Fig. 4) having information (transfer function) that indicates an electric-photo conversion characteristic corresponding to the photoelectric conversion characteristic of the transmission video data V1, information of a reference level, and the like.

The subtitle stream SS extracted in the system decoder 204 is provided to the subtitle decoder 206. The subtitle decoder 206 performs a decoding process on segment data of each region included in the subtitle stream SS and obtains subtitle bitmap data of each region, which is to be superimposed on the video data.

Further, the subtitle decoder 206 extracts abstract information included in an APTS segment (see Figs. 24 and 25) and transmits the abstract information to the control unit 201. The abstract information incudes subtitle display timing information, subtitle display control information (information of a subtitle display position, a color gamut, and a dynamic range) as well as subject video information (information of a resolution, a color gamut, and a dynamic range), and the like.

Under the control by the control unit 201, in the subtitle decoder 206, output timing of the subtitle bitmap data of each region is controlled by the control unit 201 on the basis of the subtitle display timing information ("start_time_offset" and "end_time_offset") included the abstract information for example.

The subtitle bitmap data of each region obtained by the subtitle decoder 206 is provided to the color gamut/luminance level conversion unit 207. Under the control by the control unit 201, the color gamut/luminance level conversion unit 207 modifies the color gamut of the subtitle bitmap data to fit the color gamut of the video data on the basis of the color gamut information ("subtitle_color_gamut_info" and "target_video_color_gamut_info") included in the abstract information for example.

Further, under the control by the control unit 201, the color gamut/luminance level conversion unit 207 adjusts the maximum luminance level of the subtitle bitmap data to be equal to or lower than the reference luminance level of the video data on the basis of the dynamic range information ("subtitle_dynamic_range_info" and "target_video_dynamic_range_info") included in the abstract information for example.

The subtitle bitmap data of each region obtained by the color gamut/luminance level conversion unit 207 is provided to the position/size conversion unit 208. Under the control by the control unit 201, the position/size conversion unit 208 performs a location conversion process on the subtitle bitmap data of each region on the basis of the resolution information ("subtitle_display_area" and "target_video_resolution") included in the abstract information for example.

Further, under the control by the control unit 201, the position/size conversion unit 208 performs a subtitle size conversion process on the subtitle bitmap data obtained by the color gamut/luminance level conversion unit 207 in response to an operation by a user such as a viewer or automatically on the basis of the relationship between the video resolution and the corresponding resolution of the subtitle for example.

The transmission video data V1 obtained by the video decoder 204 is provided to the video superimposition unit 209. Further, the subtitle bitmap data of each region obtained by the position/size conversion unit 208 is provided to the video superimposition unit 209. The video superimposition unit 209 superimposes the subtitle bitmap data of each region on the transmission video data V1. In this case, the subtitle bitmap data is mixed on the basis of a mix ratio indicated by the mix ratio information (Mixing data).

The transmission video data V1', which is obtained in the video superimposition unit 209 and on which the subtitle bitmap data of each region is superimposed, is converted from a YCbCr (luminance/chrominance) domain to an RGB domain in the YCbCr/RGB conversion unit 210 and provided to the electric-photo conversion unit 211. The electric-photo conversion unit 211 obtains display video data used to display an image by performing an electric-photo conversion on the transmission video data V1' as applying an electric-photo conversion characteristic corresponding to the photoelectric conversion characteristic applied thereto.

The display video data is provided to the display mapping unit 212. The display mapping unit 212 adjusts the display luminance level of the display video data according to a maximum luminance level display performance of the CE monitor 213. The display video data, in which the display luminance level is adjusted, is provided to the CE monitor 213. On the CE monitor 213, an image is displayed on the basis of the display video data.

As described above, in the transmitting/receiving system 10 illustrated in Fig. 1, subtitle text information and abstract information corresponding to the text information are included in the subtitle stream. Thus, the reception side can perform a process to display the subtitle on the basis of the abstract information and this reduces the process load.

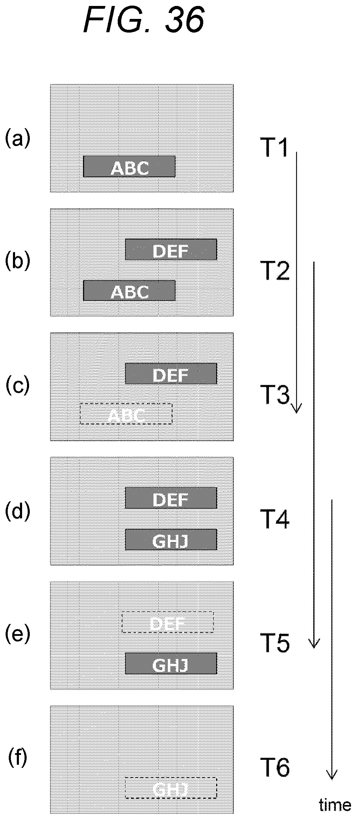

In this case, in the reception side, since the process load is reduced, a time series display control in which display of subtitles changes relatively fast can be easily handled. For example, a case where the subtitle display changes as illustrated in Figs. 36(a) to (f) will be considered.

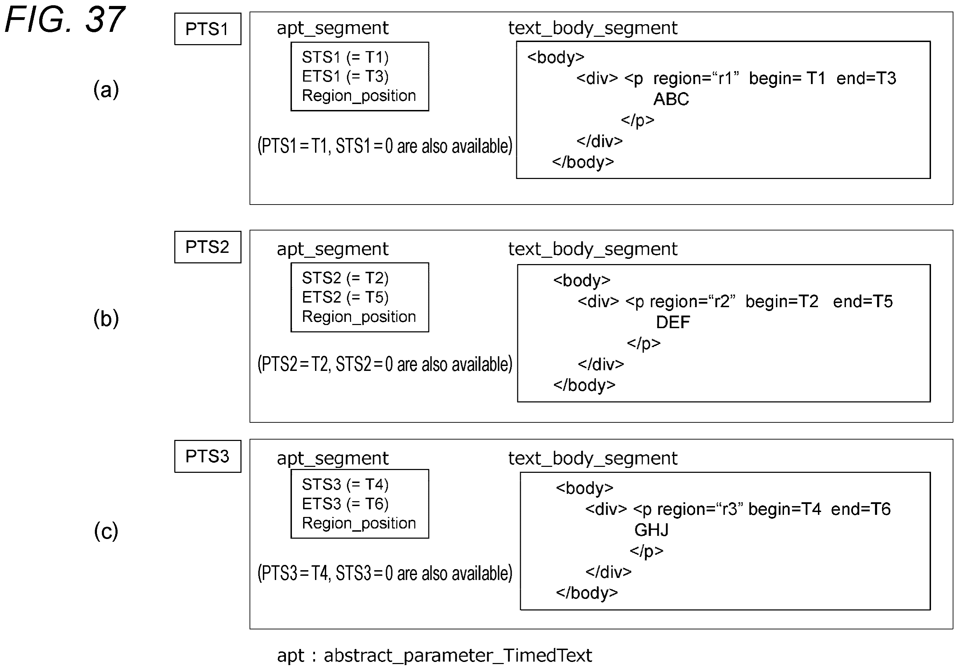

In this case, firstly, for example, as illustrated in Fig. 37 (a), a subtitle stream SS including a PES packet having a PES data payload in which segments of an APTS (abstract_parameter_TimedText_segment) and a TBS (text body segment) are provided is transmitted. The reception side generates subtitle bitmap data used to display letters of "ABC" on the position of the region "region r1" on the basis of the TBS segment data and region location information (Region_position) included in the APTS segment.

Then, the reception side outputs the bitmap data from display start timing T1 until display end timing T3, on the basis of the PTS1 and the display timing information (STS1,ETS1) included in the APTS segment. With this configuration, in the reception side, the letters of "ABC" are continuously displayed on the screen from T1 to T3 as illustrated in Fig. 36.

Next, for example, as illustrated in Fig. 37(b), a subtitle stream SS including a PES packet having a PES data payload in which segments of an APTS (abstract_parameter_TimedText_segment) and a TBS (text body segment) are provided is transmitted. The reception side generates subtitle bitmap data used to display letters of "DEF" in a position of the region "region r2", on the basis of the TBS segment data and region location information (Region_position) included in APTS segment.

Then, the reception side outputs the bitmap data from display start timing T2 until display end timing T5 on the basis of the PTS2 and display timing information (STS2,ETS2) of the APTS segment. With this configuration, in the reception side, as illustrated in Fig. 36, the letters of "DEF" are displayed on the screen from T2 to T5.

Next, for example, as illustrated in Fig. 37(c), a subtitle stream SS including a PES packet having a PES data payload in which segments of an APTS (abstract_parameter_TimedText_segment) and a TBS (text body segment) are provided is transmitted. The reception side generates subtitle bitmap data used to display letters of "GHI" on the position of the region "region r3" on the basis of the TBS segment data and region location information (Region_position) included in the APTS segment.

Then, the reception side outputs the bitmap data from display start timing T4 until display end timing T6, on the basis of PTS3 and display timing information (STS3,ETS3) included in the APTS segment. With this configuration, in the reception side, the letters of "GHI" are continuously displayed from T4 to T6 as illustrated in Fig. 36.

### <2. Modified example>

Note that the above described embodiment has described an example that TTML is used as subtitle text information in a predetermined format having display timing information. However, the present technology is not limited to this example and other timed text information having information relevant to TTML may be used. For example, a format related to TTML may be used.

Further, the above described embodiment has described an example that the container is a transport stream (MPEG-2 TS). However, it is not limited to the MPEG-2 TS container and the present technology may be realized similarly with a container in other formats such as MMT or ISOBMFF for example.

Further, the above described embodiment has described an example that TTML and abstract information are included in a segment and provided in a PES data payload of a PES packet. However, according to the present technology, it may be considered that the TTML and abstract information are directly provided to the PES data payload.

Further, the above described embodiment has described a transmitting/receiving system 10 including the transmission device 100 and reception device 200; however, the configuration of the transmitting/receiving system to which the present technology is applied is not limited to the example. For example, a part of the reception device 200 may have a configuration of a set-top box and a monitor which are connected via a digital interface such as a High-Definition Multimedia Interface (HDMI). Note that "HDMI" is a registered trademark.

A main characteristic of the present technology is that the process load to display subtitles in a reception side is reduced by including subtitle text information and abstract information corresponding to the text information in a subtitle stream (see Fig. 12).

### REFERENCE SIGNS LIST

- 10: Transmitting/receiving system
- 100: Transmission device
- 101: Control unit
- 102: Camera
- 103: Video photoelectric conversion unit
- 104: RGB/YCbCr conversion unit
- 105: Video encoder
- 106: Subtitle generation unit
- 107: Text format conversion unit
- 108: Subtitle encoder
- 109: System encoder
- 110: Transmission unit
- 200: Reception device
- 201: Control unit
- 202: User operation unit
- 203: Reception unit
- 204: System decoder
- 205: Video decoder
- 206: Subtitle decoder
- 207: Color gamut/luminance level conversion unit
- 208: Position/size conversion unit
- 209: Video superimposition unit
- 210: YCbCr/RGB conversion unit
- 211: Electric-photo conversion unit
- 212: Display mapping unit
- 213: CE monitor
- 221: Electric-photo conversion unit
- 222: Color gamut conversion unit
- 223: Photoelectric conversion unit
- 224: RGB/YCbCr conversion unit
- 225: Luminance level conversion unit
- 225Y: Component part
- 231: Encoding pixel bit depth adjustment unit
- 232: Level adjustment unit
- 261: Coded buffer
- 262: Subtitle segment decoder
- 263: Font developing unit
- 264: Bitmap buffer

## Claims

1. A transmission device (100) comprising:
a video encoder (105) configured to generate a video stream including encoded video data;
a subtitle encoder (108) configured to generate a subtitle stream including subtitle text information, which has display timing information, PTS, and abstract information, APTS, which has information corresponding to a part of pieces of information provided by the subtitle text information,
wherein the abstract information includes subtitle display timing information having information of a display start timing and a display period,
wherein
the subtitle stream is composed of a PES packet including a packetized elementary stream, PES, header and a PES payload,
the subtitle text information and the abstract information are provided in different segments of the PES payload, and
the display start timing is expressed as a display offset from the display timing information, PTS, inserted in the PES header; and
a transmission unit (110) configured to transmit a container in a predetermined format including the video stream and the subtitle stream.

2. The transmission device according to claim 1, wherein the abstract information includes display control information for controlling a subtitle display condition.

3. The transmission device (100) according to claim 2, wherein the display control information includes information of at least one of a display position, a color gamut, and a dynamic range of the subtitle.

4. The transmission device (100) according to claim 3, wherein the display control information further includes subject video information.

5. The transmission device (100) according to any one of the previous claims, wherein the abstract information includes notification information for providing notification that there is a change in an element of the subtitle text information from previously transmitted content.

6. The transmission device (100) according to any one of the previous claims, wherein the subtitle encoder (108) is configured to divide the subtitle text information and abstract information into segments and generates the subtitle stream including a predetermined number of segments.

7. The transmission device (100) according to claim 6, wherein in the subtitle stream, a segment of the abstract information is provided in the beginning and a segment of the subtitle text information is subsequently provided.

8. The transmission device (100) according to any one of the previous claims, wherein the subtitle text information is in TTML or in a format related to TTML.

9. A transmission method comprising:
a video encoding step of generating a video stream including encoded video data;
a subtitle encoding step of generating a subtitle stream including subtitle text information, PTS, which has display timing information, and abstract information, APTS, which has information corresponding to a part of pieces of information
provided by the subtitle text information,
wherein the abstract information includes subtitle display timing information having information of a display start timing and a display period,
wherein
the subtitle stream is composed of a PES packet including a packetized elementary stream, PES, header and a PES payload,
the subtitle text information and the abstract information are provided in different segments of the PES payload, and
the display start timing is expressed as a display offset from the display timing information, PTS, inserted in the PES header; and
a transmission step of transmitting, by a transmission unit, a container in a predetermined format including the video stream and the subtitle stream.

10. A reception device (200) comprising:
a reception unit (203) configured to receive a container in a predetermined format including a video stream and a subtitle stream,
the video stream including encoded video data, and
the subtitle stream including subtitle text information, which has display timing information, PTS, and abstract information, APTS, which has information corresponding to a part of pieces of information provided by the subtitle text information,
wherein the abstract information includes subtitle display timing information having information of a display start timing and a display period,
wherein
the subtitle stream is composed of a PES packet including a packetized elementary stream, PES, header and a PES payload,
the subtitle text information and the abstract information are provided in different segments of the PES payload, and
the display start timing is expressed as a display offset from the display timing information, PTS, inserted in the PES header; and
a control unit (201) configured to control a video decoding process for obtaining video data by decoding the video stream, a subtitle decoding process for decoding the subtitle stream to obtain subtitle bitmap data and extract the abstract information, a video superimposing process for superimposing the subtitle bitmap data on the video data to obtain display video data, and a bitmap data process for processing the subtitle bitmap data to be superimposed on the video data on the basis of the abstract information.

11. The reception device (200) according to claim 10, wherein
in the bitmap data process,
the timing to superimpose the subtitle bitmap data on the video data is controlled on the basis of the subtitle display timing information.

12. The reception device (200) according to claim 10 or 11,
wherein
the abstract information includes display control information for controlling the subtitle display condition, and
in the bitmap data process,
a condition of the subtitle bitmap to be superimposed on the video data is controlled on the basis of the display control information.

13. A reception method comprising:
a reception step of receiving, by a reception unit, a container in a predetermined format including a video stream and a subtitle stream,
the video stream including encoded video data, and
the subtitle stream including subtitle text information, which has display timing information, PTS, and abstract information, APTS, which has information corresponding to a part of pieces of information provided by the subtitle text information,
wherein the abstract information includes subtitle display timing information having information of a display start timing and a display period,
wherein
the subtitle stream is composed of a PES packet including a packetized elementary stream, PES, header and a PES payload,
the subtitle text information and the abstract information are provided in different segments of the PES payload, and
the display start timing is expressed as a display offset from the display timing information, PTS, inserted in the PES header;
a video decoding step of decoding the video stream to obtain video data;
a subtitle decoding step of decoding the subtitle stream to obtain subtitle bitmap data and extract the abstract information;
a video superimposing step of superimposing subtitle bitmap data on the video data to obtain display video data; and
a controlling step of controlling the subtitle bitmap data to be superimposed on the video data on the basis of the abstract information.

## Patentansprüche

1. Übertragungsvorrichtung (100), die Folgendes umfasst:
eine Video-Codiereinrichtung (105), die konfiguriert ist, einen Video-Datenstrom zu erzeugen, der codierte Videodaten enthält;
eine Untertitel-Codiereinrichtung (108), die konfiguriert ist, einen Untertitel-Datenstrom zu erzeugen, der Untertitel-Textinformationen, die Informationen (PTS) zum Anzeigezeitpunkt enthalten, und Zusammenfassungsinformationen (APTS) enthält, die Informationen aufweisen, die einem Teil der Informationen, die durch die Untertitel-Textinformationen bereitgestellt werden, entsprechen, wobei die Zusammenfassungsinformationen Informationen zum Anzeigezeitpunkt von Untertiteln enthalten, die Informationen über einen Startzeitpunkt der Anzeige und eine Anzeigedauer aufweisen,
wobei
der Untertitel-Datenstrom aus einem PES-Paket zusammengesetzt ist, das eine paketierte Elementardatenstrom-Kopfzeile (PES-Kopfzeile) und PES-Nutzdaten enthält,
die Untertitel-Textinformationen und die Zusammenfassungsinformationen in unterschiedlichen Segmenten der PES-Nutzdaten bereitgestellt werden, und
der Startzeitpunkt der Anzeige als ein Anzeigeversatz von den Informationen (PTS) zum Anzeigezeitpunkt, die in der PES-Kopfzeile eingefügt sind, ausgedrückt wird; und
eine Übertragungseinheit (110), die konfiguriert ist, einen Container in einem vorbestimmten Format, der den Video-Datenstrom und den Untertitel-Datenstrom enthält, zu übertragen.

2. Übertragungsvorrichtung nach Anspruch 1, wobei die Zusammenfassungsinformationen Anzeigesteuerungsinformationen zum Steuern einer Untertitelanzeigebedingung enthalten.

3. Übertragungsvorrichtung (100) nach Anspruch 2, wobei die Anzeigesteuerungsinformationen Informationen über eine Anzeigeposition, eine Farbskala und/oder einen dynamischen Bereich des Untertitels enthalten.

4. Übertragungsvorrichtung (100) nach Anspruch 3, wobei die Anzeigesteuerungsinformationen ferner Videoinformationen zum Thema aufweisen.

5. Übertragungsvorrichtung (100) nach einem der vorhergehenden Ansprüche, wobei die Zusammenfassungsinformationen Benachrichtigungsinformationen zum Bereitstellen einer Benachrichtigung, dass eine Änderung in einem Element der Untertitel-Textinformationen von vorher übertragenem Inhalt vorhanden ist, enthalten.

6. Übertragungsvorrichtung (100) nach einem der vorhergehenden Ansprüche, wobei die Untertitel-Codiereinrichtung (108) konfiguriert ist, die Untertitel-Textinformationen und die Zusammenfassungsinformationen in Segmente zu unterteilen, und den Untertitel-Datenstrom erzeugt, der eine vorbestimmte Zahl von Segmenten enthält.

7. Übertragungsvorrichtung (100) nach Anspruch 6, wobei in dem Untertitel-Datenstrom ein Segment der Zusammenfassungsinformationen am Anfang bereitgestellt wird und ein Segment der Untertitel-Textinformationen darauf folgend bereitgestellt wird.

8. Übertragungsvorrichtung (100) nach einem der vorhergehenden Ansprüche, wobei die Untertitel-Textinformationen im TTML-Format oder in einem Format, das sich auf TTML bezieht, sind.

9. Übertragungsverfahren, das Folgendes umfasst:
einen Videocodierungs-Schritt des Erzeugens eines Videodatenstroms, der codierte Videodaten enthält;
einen Untertitelcodierungs-Schritt des Erzeugens eines Untertitel-Datenstroms, der Untertitel-Textinformationen (PTS), die Informationen (PTS) zum Anzeigezeitpunkt aufweisen, und Zusammenfassungsinformationen (APTS) enthält, die Informationen aufweisen, die einem Teil der Informationen, die durch die Untertitel-Textinformationen bereitgestellt werden, entsprechen,
wobei die Zusammenfassungsinformationen Informationen zum Anzeigezeitpunkt von Untertiteln enthalten, die Informationen über einen Startzeitpunkt der Anzeige und eine Anzeigedauer aufweisen,
wobei
der Untertitel-Datenstrom aus einem PES-Paket zusammengesetzt ist, das eine paketierte Elementardatenstrom-Kopfzeile (PES-Kopfzeile) und PES-Nutzdaten enthält,
die Untertitel-Textinformationen und die Zusammenfassungsinformationen in unterschiedlichen Segmenten der PES-Nutzdaten bereitgestellt werden, und
der Startzeitpunkt der Anzeige als ein Anzeigeversatz von den Informationen (PTS) zum Anzeigezeitpunkt, die in die PES-Kopfzeile eingefügt sind, ausgedrückt wird; und
einen Übertragungsschritt des Übertragens eines Containers in einem vorbestimmten Format, der den Video-Datenstrom und den Untertitel-Datenstrom enthält, durch eine Übertragungseinheit.

10. Empfangsvorrichtung (200), die Folgendes umfasst:
eine Empfangseinheit (203), die konfiguriert ist, einen Container in einem vorbestimmten Format zu empfangen, der einen Video-Datenstrom und einen Untertitel-Datenstrom enthält,
wobei der Video-Datenstrom codierte Videodaten enthält, und
der Untertitel-Datenstrom Untertitel-Textinformationen enthält, die Informationen (PTS) zum Anzeigezeitpunkt und Zusammenfassungsinformationen (APTS) aufweisen, die Informationen, die einem Teil der Informationen entsprechen, die in den Untertitel-Textinformationen bereitgestellt werden, aufweisen,
wobei die Zusammenfassungsinformationen Informationen zum Anzeigezeitpunkt von Untertiteln enthalten, die Informationen über einen Startzeitpunkt der Anzeige und eine Anzeigedauer aufweisen,
wobei
der Untertitel-Datenstrom aus einem PES-Paket zusammengesetzt ist, das eine paketierte Elementardatenstrom-Kopfzeile (PES-Kopfzeile) und PES-Nutzdaten enthält,
die Untertitel-Textinformationen und die Zusammenfassungsinformationen in unterschiedlichen Segmenten der PES-Nutzdaten bereitgestellt werden, und
der Startzeitpunkt der Anzeige als ein Anzeigeversatz von den Informationen (PTS) zum Anzeigezeitpunkt, die in der PES-Kopfzeile eingefügt sind, ausgedrückt wird; und
eine Steuereinheit (201), die konfiguriert ist, einen Video-Decodierungsprozess zum Erhalten von Videodaten durch Decodieren des Video-Datenstroms, einen Untertitel-Decodierungsprozess zum Decodieren des Untertitel-Datenstroms, um Untertitel-Bitmap-Daten zu erhalten und die Zusammenfassungsinformationen zu extrahieren, einen Video-Überlagerungsprozess zum Überlagern der Untertitel-Bitmap-Daten auf die Videodaten, um Anzeige-Videodaten zu erhalten, und einen Bitmap-Daten-Prozess zum Verarbeiten der Untertitel-Bitmap-Daten, die den Videodaten überlagert werden sollen, auf der Grundlage der Zusammenfassungsinformationen zu steuern.

11. Empfangsvorrichtung (200) nach Anspruch 10, wobei
in dem Bitmap-Daten-Prozess,
der Zeitpunkt, um die Untertitel-Bitmap-Daten den Videodaten zu überlagern, auf der Grundlage der Informationen zum Anzeigezeitpunkt von Untertiteln gesteuert wird.

12. Empfangsvorrichtung (200) nach Anspruch 10 oder 11, wobei
die Zusammenfassungsinformationen Anzeigesteuerungsinformationen zum Steuern der Untertitel-Anzeigebedingung enthalten, und
in dem Bitmap-Daten-Prozess,
eine Bedingung der Untertitel-Bitmap-Daten, die den Videodaten überlagert werden sollen, auf der Grundlage der Anzeigesteuerungsinformationen gesteuert wird.

13. Empfangsverfahren, das Folgendes umfasst:
einen Empfangsschritt des Empfangens eines Containers in einem vorbestimmten Format, der einen Video-Datenstrom und einen Untertitel-Datenstrom enthält, durch eine Empfangseinheit,
wobei der Video-Datenstrom codierte Videodaten enthält, und
der Untertitel-Datenstrom Untertitel-Textinformationen enthält, die Informationen (PTS) zum Anzeigezeitpunkt und Zusammenfassungsinformationen (APTS) aufweisen, die Informationen aufweisen, die einem Teil der Informationen, die in den Untertitel-Textinformationen bereitgestellt werden, entsprechen,
wobei die Zusammenfassungsinformationen Informationen zum Anzeigezeitpunkt von Untertiteln enthalten, die Informationen über einen Startzeitpunkt der Anzeige und eine Anzeigedauer aufweisen,
wobei
der Untertitel-Datenstrom aus einem PES-Paket zusammengesetzt ist, das eine paketierte Elementardatenstrom-Kopfzeile (PES-Kopfzeile) und PES-Nutzdaten enthält,
die Untertitel-Textinformationen und die Zusammenfassungsinformationen in unterschiedlichen Segmenten der PES-Nutzdaten bereitgestellt werden, und
der Startzeitpunkt der Anzeige als ein Anzeigeversatz von den Informationen (PTS) zum Anzeigezeitpunkt, die in der PES-Kopfzeile eingefügt sind, ausgedrückt wird;
einen Video-Decodierungsschritt des Decodierens des Video-Datenstroms, um Videodaten zu erhalten;
einen Untertitel-Decodierungsschritt des Decodierens des Untertitel-Datenstroms, um Untertitel-Bitmap-Daten zu erhalten und die Zusammenfassungsinformationen zu extrahieren;
einen Videoüberlagerungsschritt des Überlagerns von Untertitel-Bitmap-Daten auf die Videodaten, um Anzeige-Videodaten zu erhalten; und
einen Steuerungsschritt des Steuerns der Untertitel-Bitmap-Daten, die den Video-Daten überlagert werden sollen, auf der Grundlage der Zusammenfassungsinformationen.

## Revendications

1. Dispositif de transmission (100) comprenant :
un codeur vidéo (105) configuré de façon à générer un flux vidéo comprenant des données vidéo codées ;
un codeur de sous-titres (108) configuré de façon à générer un flux de sous-titres comprenant des informations de texte de sous-titres, qui ont des informations de synchronisation d'affichage, PTS, et des informations abstraites, APTS, qui ont des informations correspondant à une partie d'éléments d'information fournis par les informations du texte des sous-titres, les informations abstraites comprenant des informations de synchronisation d'affichage de sous-titres ayant des informations d'une synchronisation de début d'affichage et une période d'affichage,
le flux de sous-titres étant composé d'un paquet PES comprenant un en-tête de flux élémentaire paquétisé, PES, et une charge utile PES,
les informations du texte des sous-titres et les informations abstraites étant fournies dans différents segments de la charge utile PES, et
la synchronisation du début d'affichage étant exprimée comme un décalage d'affichage par rapport aux informations de synchronisation d'affichage, PTS, insérées dans l'en-tête PES ; et
une unité de transmission (110) configurée de façon à transmettre un contenant dans un format prédéterminé comprenant le flux vidéo et le flux de sous-titres.

2. Dispositif de transmission selon la revendication 1, dans lequel les informations abstraites comprennent des informations de commande d'affichage pour commander un état d'affichage des sous-titres.

3. Dispositif de transmission (100) selon la revendication 2, dans lequel les informations de commande d'affichage comprennent des informations d'au moins soit une position d'affichage, soit une gamme de couleurs, soit une plage dynamique du sous-titre.

4. Dispositif de transmission (100) selon la revendication 3, dans lequel les informations de commande d'affichage comprennent en outre des informations vidéo de sujet.

5. Dispositif de transmission (100) selon l'une quelconque des revendications précédentes, dans lequel les informations abstraites comprennent des informations de notification pour fournir une notification qu'il y a un changement dans un élément des informations du texte des sous-titres par rapport au contenu transmis antérieurement.

6. Dispositif de transmission (100) selon l'une quelconque des revendications précédentes, dans lequel le codeur de sous-titres (108) est configuré de façon à diviser les informations du texte des sous-titres et les informations abstraites en segments et génère le flux de sous-titres comprenant un nombre prédéterminé de segments.

7. Dispositif de transmission (100) selon la revendication 6, dans lequel, dans le flux de sous-titres, un segment des informations abstraites est fourni au début et un segment des informations du texte des sous-titres est fourni ensuite.

8. Dispositif de transmission (100) selon l'une quelconque des revendications précédentes, dans lequel les informations du texte des sous-titres sont en TTML ou dans un format lié à TTML.

9. Procédé de transmission comprenant :
une étape de codage vidéo consistant à générer un flux vidéo comprenant des données vidéo codées ;
une étape de codage des sous-titres consistant à générer un flux de sous-titres comprenant des informations du texte des sous-titres, PTS, qui ont des informations de synchronisation d'affichage, et des informations abstraites, APTS, qui ont des informations correspondant à une partie d'éléments d'information fournis par les informations du texte des sous-titres, les informations abstraites comprenant des informations de synchronisation d'affichage de sous-titres ayant des informations d'une synchronisation de début d'affichage et une période d'affichage,
le flux de sous-titres étant composé d'un paquet PES comprenant un en-tête de flux élémentaire paquétisé, PES, et une charge utile PES,
les informations du texte des sous-titres et les informations abstraites étant fournies dans différents segments de la charge utile PES, et
la synchronisation du début d'affichage étant exprimée comme un décalage d'affichage par rapport aux informations de synchronisation d'affichage, PTS, insérées dans l'en-tête PES ; et
une étape de transmission consistant à transmettre, au moyen d'une unité de transmission, un contenant dans un format prédéterminé comprenant le flux vidéo et le flux de sous-titres.

10. Dispositif de réception (200) comprenant :
une unité de réception (203) configurée de façon à recevoir un contenant dans un format prédéterminé comprenant un flux vidéo et un flux de sous-titres,
le flux vidéo comprenant des données vidéo codées, et
le flux de sous-titres comprenant des informations de texte des sous-titres qui ont des informations de synchronisation d'affichage, PTS, et des informations abstraites, APTS, qui ont des informations correspondant à une partie d'éléments d'information fournis par les informations du texte des sous-titres,
les informations abstraites comprenant des informations de synchronisation d'affichage des sous-titres ayant des informations d'une synchronisation de début d'affichage et une période d'affichage,
le flux de sous-titres étant composé d'un paquet PES comprenant un en-tête de flux élémentaire paquétisé, PES, et une charge utile PES,
les informations du texte des sous-titres et les informations abstraites étant fournies dans différents segments de la charge utile PES, et
la synchronisation du début d'affichage étant exprimée comme un décalage d'affichage par rapport aux informations de synchronisation d'affichage, PTS, insérées dans l'en-tête PES ; et
une unité de commande (201) configurée de façon à commander un processus de décodage vidéo pour obtenir des données vidéo en décodant le flux vidéo, un processus de décodage de sous-titres pour décoder le flux de sous-titres afin d'obtenir des données bitmap de sous-titres et d'extraire les informations abstraites, un processus de superposition vidéo pour superposer les données bitmap de sous-titres sur les données vidéo afin d'obtenir des données vidéo d'affichage, et un processus de données bitmap pour traiter les données bitmap des sous-titres pour qu'elles soient superposées sur les données vidéo en se basant sur les informations abstraites.

11. Dispositif de réception (200) selon la revendication 10, dans lequel
dans le processus de données bitmap,
la synchronisation pour superposer les données bitmap de sous-titres sur les données vidéo est commandée en se basant sur les informations de synchronisation d'affichage des sous-titres.

12. Dispositif de réception (200) selon la revendication 10 ou 11, dans lequel
les informations abstraites comprennent des informations de commande d'affichage pour commander l'état d'affichage des sous-titres, et dans lequel
dans le processus de données bitmap,
une condition pour que les données bitmap de sous-titres soient superposées sur les données vidée est commandée en se basant sur les informations de commande d'affichage.

13. Procédé de réception comprenant :
une étape de réception consistant à recevoir, au moyen d'une unité de réception, un contenant dans un format prédéterminé comprenant un flux vidéo et un flux de sous-titres,
le flux vidéo comprenant des données vidéo codées, et
le flux de sous-titres comprenant des informations de texte des sous-titres qui ont des informations de synchronisation d'affichage, PTS, et des informations abstraites, APTS, qui ont des informations correspondant à une partie d'éléments d'information fournis par les informations du texte des sous-titres,
les informations abstraites comprenant des informations de synchronisation d'affichage des sous-titres ayant des informations d'une synchronisation de début d'affichage et une période d'affichage,
le flux de sous-titres étant composé d'un paquet PES comprenant un en-tête de flux élémentaire paquétisé, PES, et une charge utile PES,
les informations du texte des sous-titres et les informations abstraites étant fournies dans différents segments de la charge utile PES, et
la synchronisation du début d'affichage étant exprimée comme un décalage d'affichage par rapport aux informations de synchronisation d'affichage, PTS, insérées dans l'en-tête PES ;
une étape de décodage vidéo consistant à décoder le flux vidéo afin d'obtenir des données vidéo ;
une étape de décodage de sous-titres consistant à décoder le flux de sous-titres afin d'obtenir des données bitmap de sous-titres et d'extraire les informations abstraites ;
une étape de superposition consistant à superposer les données bitmap de sous-titres sur les données vidéo afin d'obtenir des données vidéo d'affichage ; et
une étape de commande consistant à commander les données bitmap de sous-titres pour qu'elles soient superposées sur les données vidéo en se basant sur les informations abstraites.
